# EUROPEAN PATENT APPLICATION

(11) **EP 4 827 211 A1**
(43) Date of publication of application: **21.10.2026**
(21) Application number: 24910548.7
(22) Date of filing: 02.12.2024
(51) Int. Cl.: H04W 72/231

(54) **COMMUNICATION METHOD AND APPARATUS, AND SYSTEM**

(30) Priority: 29.12.2023 CN 202311870187
(71) Applicant: Huawei Technologies Co., Ltd., Shenzhen, Guangdong 518129 (CN)
(72) Inventor: PENG, Wenjie, Shenzhen, Guangdong 518129 (CN); PAN, Xiaodan, Shenzhen, Guangdong 518129 (CN)
(74) Representative: Isarpatent
(86) International application number: PCT/CN2024/136115
(87) International publication number: WO 2025/139616

(57) **Abstract**

A communication method and apparatus, and a system are provided. The method includes: After receiving first information from a first access network node, a terminal may send second information to a second access network node by using a first resource. The first information includes first resource information, the first resource information is used to determine the first resource, and a destination receiving device of the second information may be the first access network node. A first connection exists between the terminal and the first access network node, and a second connection exists between the terminal and the second access network node. According to the method, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, thereby achieving uplink coverage enhancement for the terminal and improving user experience.

## Description

### CROSS-REFERENCE TO RELATED APPLICATIONS

This application claims priority to Chinese Patent Application No. 202311870187.6, filed with the China National Intellectual Property Administration on December 29, 2023 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

In some scenarios, for example, in a dual connectivity (dual connectivity, DC) scenario, two access network nodes may provide data transmission services for one terminal together. In the two access network nodes, the access network node carrying a control plane connection may be a master station (also referred to as a master access network node or a master base station), and the other access network node may be a secondary station (also referred to as a secondary access network node or a secondary base station).

Uplink communication quality between the terminal and the master station may be different from uplink communication quality between the terminal and the secondary station. For example, the uplink communication quality between the terminal and the master station may be relatively good, while the uplink communication quality between the terminal and the secondary station may be relatively poor or even interrupted; or the uplink communication quality between the terminal and the secondary station may be relatively good, while the uplink communication quality between the terminal and the master station is relatively poor or even interrupted.

### SUMMARY

This application provides a communication method and apparatus, and a system to improve uplink communication quality between a terminal and an access network node.

According to a first aspect, an embodiment of this application provides a communication method. The method may be applied to a first apparatus. The first apparatus may be a terminal or a module (for example, a circuit, a chip, a chip system, or a processor) in a terminal; or may be a logical node, a logical module, or software that can implement all or some functions of a terminal. The following uses an example in which the first apparatus is the terminal for description. The method may include: The terminal may receive first information from a first access network node, where the first information may include first resource information used to determine a first resource. For example, the first information may be downlink control information (downlink control information, DCI). The terminal may send second information to a second access network node by using the first resource, where a destination receiving device of the second information may be the first access network node. A first connection exists between the terminal and the first access network node, and a second connection exists between the terminal and the second access network node.

According to the method, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience.

In a possible design, a format of the first information and/or first indication information in the first information may indicate that the first resource is used for communication between the terminal and the second access network node. In this way, after receiving the first information, the terminal may determine that the first resource is used for communication between the terminal and the second access network node, and may communicate with the second access network node by using the first resource.

In a possible design, the first resource information and the second resource information may be used to determine the first resource. The second resource information may indicate a second resource, and the second resource may be a downlink resource between the second access network node and the terminal. In this way, the terminal can quickly and accurately determine the first resource based on the first resource information and the second resource information.

In a possible design, a first value and a first time unit may be used to determine the first resource. The first value may be indicated by the first resource information, and the first time unit may be a time unit in which the second resource is located. In this way, the terminal can quickly and accurately determine the first resource based on the first value and the first time unit.

In a possible design, the first value and the first time unit may be used to determine a second time unit. The second time unit may be a time unit in which the first resource is located, and the second time unit may be used to determine the first resource. In this way, the terminal may determine the second time unit based on the first value and the first time unit, and quickly and accurately determine the first resource based on the second time unit.

In a possible design, the first value may be k, and k is a positive integer. The first time unit may be an n^{th} time unit in the first access network node. The second time unit may be an m^{th} time unit in the second access network node, and m may be an integer. The m^{th} time unit overlaps an (n+k)^{th} time unit in the first access network node in time domain. The terminal can quickly and accurately determine the m^{th} time unit by using this design.

In a possible design, P time units in the second access network node overlap the (n+k)^{th} time unit in the first access network node in time domain, P may be an integer greater than or equal to 2, and the m^{th} time unit belongs to the P time units. In this way, when a plurality of time units in the second access network node overlap the (n+k)^{th} time unit in the first access network node in time domain, the terminal can quickly determine the m^{th} time unit.

In a possible design, the m^{th} time unit may be one of the following:
an i^{th} time unit in the P time units, where i may be an integer from 1 to P;
a time unit that is in the P time units and that has a largest overlapping range with the (n+k)^{th} time unit in time domain;
a time unit that is in the P time units and that has a smallest overlapping range with the (n+k)^{th} time unit in time domain;
a j^{th} time unit in Q time units in the P time units, where Q may be a positive integer, j may be an integer from 1 to Q, and an uplink resource used to transmit information whose destination receiving device is the first access network node exists in any one of the Q time units;
a time unit that is in Q time units and that has a largest overlapping range with the (n+k)^{th} time unit in time domain; or
a time unit that is in Q time units and that has a smallest overlapping range with the (n+k)^{th} time unit in time domain.

This design provides a plurality of possible manners of the m^{th} time unit, and the terminal can flexibly determine the m^{th} time unit by using this design.

In a possible design, the first value may be k, and k is a positive integer. The first time unit may be an n^{th} time unit in the first access network node. The second time unit may be an m^{th} time unit in the second access network node, and m may be an integer. An (m-k)^{th} time unit in the second access network node overlaps the n^{th} time unit in time domain. In this way, the terminal can quickly and accurately determine the m^{th} time unit.

In a possible design, R time units in the second access network node overlap the n^{th} time unit in time domain, R may be an integer greater than or equal to 2, and the (m-k)^{th} time unit belongs to the R time units. In this way, when a plurality of time units in the second access network node overlap the n^{th} time unit in the first access network node in time domain, the terminal can quickly determine the m^{th} time unit.

In a possible design, the (m-k)^{th} time unit may be one of the following:
an a^{th} time unit in the R time units, where a may be an integer from 1 to R;
a time unit that is in the R time units and that has a largest overlapping range with the n^{th} time unit in time domain; or
a time unit that is in the R time units and that has a smallest overlapping range with the n^{th} time unit in time domain.

This design provides a plurality of possible manners of the (m-k)^{th} time unit, and the terminal can flexibly determine the m^{th} time unit by using this design.

In a possible design, an uplink resource may exist in the second time unit. For example, an uplink resource of the second access network node exists in the second time unit. In this way, the terminal may determine, based on the first value and the first time unit, the second time unit in which the uplink resource exists, thereby improving validity of determining the first resource based on the second time unit.

In a possible design, the uplink resource used to transmit the information whose destination receiving device is the first access network node exists in the second time unit. In this way, the terminal may send information to the first access network node by using the second access network node and the uplink resource in the second time unit.

In a possible design, a format of the second information and/or second indication information in the second information indicates that the destination receiving device of the second information may be the first access network node. In this way, after receiving the second information, the second access network node may determine to forward the second information to the first access network node.

In a possible design, the terminal may determine the first resource, and the first resource may be determined based on the first resource information and resource configuration information. The resource configuration information may include an uplink resource configuration that is in the second access network node and that is used to transmit the information whose destination receiving device is the first access network node. The terminal can quickly and accurately determine the first resource by using this design.

In a possible design, the terminal may receive third information from the second access network node, where the third information includes the resource configuration information. For example, the third information may be a radio resource control (radio resource control, RRC) message. The terminal can obtain the resource configuration information in time by using this design.

According to a second aspect, an embodiment of this application provides a communication method. The method may be applied to a second apparatus. The second apparatus may be a first access network node or a module (for example, a circuit, a chip, a chip system, or a processor) in a first access network node; or may be a logical node, a logical module, or software that can implement all or some functions of a first access network node. The following uses an example in which the second apparatus is the first access network node for description. The method may include: The first access network node sends first information to a terminal, where the first information includes first resource information, the first resource information is used to determine a first resource, and the first resource may be an uplink resource of a second access network node. Then, the first access network node may receive second information from the terminal by using the second access network node.

According to the method, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience.

In a possible design, the first access network node may receive third indication information from the second access network node, where the third indication information may include an uplink resource configuration that is in the second access network node and that is used to transmit information whose destination receiving device is the first access network node, and the third indication information may be further used to determine the first resource. In this way, the first access network node may schedule a resource of the second access network node for the terminal based on the third indication information. For example, the first access network node may determine the first resource based on the third indication information, and send, to the terminal, the first information used to determine the first resource.

In a possible design, the first access network node may receive a secondary station addition request from the second access network node, where the secondary station addition request may include the third indication information. By using this design, the first access network node may actively send the third indication information to the second access network node, so that a procedure can be simplified, and signaling overheads can be reduced.

In a possible design, the first access network node may send a first request to the second access network node, where the first request may be used to request to obtain the third indication information. By using this design, the first access network node may send the third indication information to the second access network node based on a request of the second access network node, to share a resource of the first access network node with the second access network node as required, thereby improving resource utilization.

In a possible design, the first request includes at least one of the following:
a time domain range of an uplink resource that the first access network node expects to obtain;
a frequency domain range of an uplink resource that the first access network node expects to obtain;
a size of an uplink resource that the first access network node expects to obtain; or
a carrier spacing of an uplink resource that the first access network node expects to obtain.

By using this design, the first access network node may send, to the second access network node, information about the uplink resource that the first access network node expects to obtain. In this way, the second access network node may provide, based on the information about the uplink resource that the first access network node expects to obtain, the uplink resource configuration used to transmit the information whose destination receiving device is the first access network node, thereby improving resource utilization and avoiding resource waste.

In a possible design, the first access network node may receive fourth indication information from the second access network node, where the fourth indication information indicates that communication between the first access network node and the terminal includes only downlink communication. In this way, after receiving the fourth indication information, the first access network node does not schedule an uplink resource of the first access network node for the terminal, thereby avoiding resource waste.

In a possible design, a format of the first information and/or first indication information in the first information may indicate that the first resource is used for communication between the terminal and the second access network node. In this way, after receiving the first information, the terminal may determine that the first resource is used for communication between the terminal and the second access network node, and may communicate with the second access network node by using the first resource.

In a possible design, the first resource information and second resource information may be used to determine the first resource, the second resource information may indicate a second resource, and the second resource may be a downlink resource between the second access network node and the terminal. In this way, the terminal can quickly and accurately determine the first resource based on the first resource information and the second resource information.

In a possible design, a first value and a first time unit may be used to determine the first resource. The first value may be indicated by the first resource information, and the first time unit may be a time unit in which the second resource is located. In this way, the terminal can quickly and accurately determine the first resource based on the first value and the first time unit.

In a possible design, the first value and the first time unit may be used to determine a second time unit. The second time unit may be a time unit in which the first resource is located, and the second time unit may be used to determine the first resource. In this way, the terminal may determine the second time unit based on the first value and the first time unit, and quickly and accurately determine the first resource based on the second time unit.

In a possible design, the first value may be k, and k may be a positive integer. The first time unit may be an n^{th} time unit in the first access network node. The second time unit may be an m^{th} time unit in the second access network node, and m may be an integer. The m^{th} time unit overlaps an (n+k)^{th} time unit in the first access network node in time domain. The terminal can quickly and accurately determine the m^{th} time unit by using this design.

In a possible design, P time units in the second access network node overlap the (n+k)^{th} time unit in the first access network node in time domain, P may be an integer greater than or equal to 2, and the m^{th} time unit belongs to the P time units. In this way, when a plurality of time units in the second access network node overlap the (n+k)^{th} time unit in the first access network node in time domain, the terminal can quickly determine the m^{th} time unit.

In a possible design, the m^{th} time unit may be one of the following:
an i^{th} time unit in the P time units, where i may be an integer from 1 to P;
a time unit that is in the P time units and that has a largest overlapping range with the (n+k)^{th} time unit in time domain;
a time unit that is in the P time units and that has a smallest overlapping range with the (n+k)^{th} time unit in time domain;
a j^{th} time unit in Q time units in the P time units, where Q may be a positive integer, j is an integer from 1 to Q, and an uplink resource used to transmit information whose destination receiving device is the first access network node exists in any one of the Q time units;
a time unit that is in Q time units and that has a largest overlapping range with the (n+k)^{th} time unit in time domain; or
a time unit that is in Q time units and that has a smallest overlapping range with the (n+k)^{th} time unit in time domain.

This design provides a plurality of possible manners of the m^{th} time unit, and the terminal can flexibly determine the m^{th} time unit by using this design.

In a possible design, the first value may be k, and k may be a positive integer. The first time unit may be an n^{th} time unit in the first access network node. The second time unit may be an m^{th} time unit in the second access network node, and m may be an integer. An (m-k)^{th} time unit in the second access network node overlaps the n^{th} time unit in time domain. In this way, the terminal can quickly and accurately determine the m^{th} time unit.

In a possible design, R time units in the second access network node overlap the n^{th} time unit in time domain, R may be an integer greater than or equal to 2, and the (m-k)^{th} time unit belongs to the R time units. In this way, when a plurality of time units in the second access network node overlap the n^{th} time unit in the first access network node in time domain, the terminal can quickly determine the m^{th} time unit.

In a possible design, the (m-k)^{th} time unit may be one of the following:
an a^{th} time unit in the R time units, where a may be an integer from 1 to R;
a time unit that is in the R time units and that has a largest overlapping range with the n^{th} time unit in time domain; or
a time unit that is in the R time units and that has a smallest overlapping range with the n^{th} time unit in time domain.

This design provides a plurality of possible manners of the (m-k)^{th} time unit, and the terminal can flexibly determine the m^{th} time unit by using this design.

In a possible design, an uplink resource exists in the second time unit. For example, an uplink resource of the second access network node exists in the second time unit. In this way, the terminal may determine, based on the first value and the first time unit, the second time unit in which the uplink resource exists, thereby improving validity of determining the first resource based on the second time unit.

In a possible design, the uplink resource used to transmit the information whose destination receiving device is the first access network node exists in the second time unit. In this way, the terminal may send information to the first access network node by using the second access network node and the uplink resource in the second time unit.

In a possible design, a format of the second information and/or second indication information in the second information may indicate that the destination receiving device of the second information may be the first access network node. In this way, after receiving the second information, the second access network node may determine to forward the second information to the first access network node.

In a possible design, the first access network node may receive time information from the second access network node. The time information may be used to determine a third time unit. The third time unit may be a time unit in the first access network node and corresponds to a moment at which the second access network node receives the second information. By using this design, the first access network node may determine, based on the third time unit, downlink data for which the second information is fed back.

In a possible design, the time information may indicate a fourth time unit or the third time unit. The fourth time unit may be a time unit in the second access network node and corresponds to a moment at which the second access network node receives the second information. The fourth time unit may be used to determine the third time unit. By using this design, the first access network node can quickly and accurately determine the third time unit based on the time information.

In a possible design, a system frame number and frame time difference between a first cell in the first access network node and a second cell in the second access network node and the fourth time unit may be used to determine the third time unit. In this way, the first access network node can quickly and accurately determine the third time unit based on the system frame number and frame time difference and the fourth time unit.

In a possible design, the first access network node may obtain the system frame number and frame time difference. For example, the first access network node may receive fourth information from the terminal or the second access network node, where the fourth information indicates the system frame number and frame time difference. In this way, the first access network node can obtain the SFTD in time.

According to a third aspect, an embodiment of this application provides a communication method. The method may be applied to a third apparatus. The third apparatus may be a second access network node or a module (for example, a circuit, a chip, a chip system, or a processor) in a second access network node; or may be a logical node, a logical module, or software that can implement all or some functions of a second access network node. The method may include: The second access network node may receive second information sent by a terminal by using a first resource, where the first resource may be determined based on first resource information in first information from a first access network node. Then, the second access network node may send the second information to the first access network node. A destination receiving device of the second information may be the first access network node, a first connection exists between the terminal and the first access network node, and a second connection exists between the terminal and the second access network node.

In a possible design, the second access network node may send third indication information to the first access network node, where the third indication information may include an uplink resource configuration that is in the second access network node and that is used to transmit information whose destination receiving device is the first access network node.

In a possible design, the second access network node may send a secondary station addition request to the first access network node, where the secondary station addition request includes the third indication information.

In a possible design, the second access network node may receive a first request from the first access network node, where the first request may be used to request to obtain the third indication information.

In a possible design, the first request may include at least one of the following:
a time domain range of an uplink resource that the first access network node expects to obtain;
a frequency domain range of an uplink resource that the first access network node expects to obtain;
a size of an uplink resource that the first access network node expects to obtain; or
a carrier spacing of an uplink resource that the first access network node expects to obtain.

In a possible design, the second access network node may send fourth indication information to the first access network node, where the fourth indication information may indicate that communication between the first access network node and the terminal includes only downlink communication.

In a possible design, a format of the first information and/or first indication information in the first information may indicate that the first resource is used for communication between the terminal and the second access network node.

In a possible design, the first resource information and second resource information may be used to determine the first resource, the second resource information may indicate a second resource, and the second resource may be a downlink resource between the second access network node and the terminal.

In a possible design, a first value and a first time unit may be used to determine the first resource. The first value may be indicated by the first resource information, and the first time unit may be a time unit in which the second resource is located.

In a possible design, the first value and the first time unit may be used to determine a second time unit. The second time unit may be a time unit in which the first resource is located, and the second time unit may be used to determine the first resource.

In a possible design, the first value may be k, and k may be a positive integer. The first time unit may be an n^{th} time unit in the first access network node. The second time unit may be an m^{th} time unit in the second access network node, and m may be an integer. The m^{th} time unit overlaps an (n+k)^{th} time unit in the first access network node in time domain.

In a possible design, P time units in the second access network node overlap the (n+k)^{th} time unit in the first access network node in time domain, P may be an integer greater than or equal to 2, and the m^{th} time unit belongs to the P time units.

In a possible design, the m^{th} time unit may be one of the following:
an i^{th} time unit in the P time units, where i may be an integer from 1 to P;
a time unit that is in the P time units and that has a largest overlapping range with the (n+k)^{th} time unit in time domain;
a time unit that is in the P time units and that has a smallest overlapping range with the (n+k)^{th} time unit in time domain;
a j^{th} time unit in Q time units in the P time units, where Q may be a positive integer, j may be an integer from 1 to Q, and an uplink resource used to transmit information whose destination receiving device is the first access network node exists in any one of the Q time units;
a time unit that is in Q time units and that has a largest overlapping range with the (n+k)^{th} time unit in time domain; or
a time unit that is in Q time units and that has a smallest overlapping range with the (n+k)^{th} time unit in time domain.

In a possible design, the first value may be k, and k may be a positive integer. The first time unit may be an n^{th} time unit in the first access network node. The second time unit may be an m^{th} time unit in the second access network node, and m may be an integer. An (m-k)^{th} time unit in the second access network node overlaps the n^{th} time unit in time domain.

In a possible design, R time units in the second access network node overlap the n^{th} time unit in time domain, R may be an integer greater than or equal to 2, and the (m-k)^{th} time unit belongs to the R time units.

In a possible design, the (m-k)^{th} time unit may be one of the following:
an a^{th} time unit in the R time units, where a is an integer from 1 to R;
a time unit that is in the R time units and that has a largest overlapping range with the n^{th} time unit in time domain; or
a time unit that is in the R time units and that has a smallest overlapping range with the n^{th} time unit in time domain.

In a possible design, an uplink resource may exist in the second time unit.

In a possible design, the uplink resource used to transmit the information whose destination receiving device is the first access network node may exist in the second time unit.

In a possible design, a format of the second information and/or second indication information in the second information may indicate that the destination receiving device of the second information may be the first access network node.

In a possible design, the second access network node may send time information to the first access network node. The time information may be used to determine a third time unit. The third time unit may be a time unit in the first access network node and corresponds to a moment at which the second access network node receives the second information.

In a possible design, the time information indicates a fourth time unit or the third time unit. The fourth time unit may be a time unit in the second access network node and corresponds to a moment at which the second access network node receives the second information. The fourth time unit may be used to determine the third time unit.

In a possible design, a system frame number and frame time difference between a first cell in the first access network node and a second cell in the second access network node and the fourth time unit may be used to determine the third time unit.

In a possible design, the second access network node may send fourth information to the first access network node, where the fourth information may indicate the system frame number and frame time difference.

In a possible design, the second access network node may send third information to the terminal, where the third information may include resource configuration information, the resource configuration information may include an uplink resource configuration that is in the second access network node and that is used to transmit the information whose destination receiving device is the first access network node, and the resource configuration information may be used to determine the first resource.

According to a fourth aspect, this application provides a communication apparatus. The communication apparatus may be a terminal or a module (for example, a circuit, a chip, a chip system, or a processor) in a terminal; or may be a logical node, a logical module, or software that can implement all or some functions of a terminal. The communication apparatus has a function of implementing the first aspect. For example, the communication apparatus includes a corresponding module, unit, or means for performing the operations in the first aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive signals to implement communication between the communication apparatus and another apparatus. The processing unit may be configured to perform some internal operations of the communication apparatus. Functions performed by the processing unit and the interface unit may correspond to the operations in the first aspect.

In a possible design, the communication apparatus includes a processor, and the processor may be configured to couple to a memory. The memory may store a computer program or instructions necessary for implementing functions in the first aspect. The processor may execute the computer program or instructions stored in the memory. When the computer program or instructions are executed, the communication apparatus is enabled to implement the method in any possible design of the first aspect.

In a possible design, the communication apparatus includes a processor and a memory. The memory may store a computer program or instructions necessary for implementing functions in the first aspect. The processor may execute the computer program or instructions stored in the memory. When the computer program or instructions are executed, the communication apparatus is enabled to implement the method in any possible design of the first aspect.

In a possible design, the communication apparatus includes a processor and an interface circuit. The processor is configured to communicate with another apparatus through the interface circuit, and perform the method in any possible design of the first aspect.

According to a fifth aspect, this application provides a communication apparatus. The communication apparatus may be an access network node or a module (for example, a circuit, a chip, a chip system, or a processor) in an access network node; or may be a logical node, a logical module, or software that can implement all or some functions of an access network node. The communication apparatus has a function of implementing the second aspect. For example, the communication apparatus includes a corresponding module, unit, or means for performing the operations in the second aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive signals to implement communication between the communication apparatus and another apparatus. The processing unit may be configured to perform some internal operations of the communication apparatus. Functions performed by the processing unit and the interface unit may correspond to the operations in the second aspect.

In a possible design, the communication apparatus includes a processor, and the processor may be configured to couple to a memory. The memory may store a computer program or instructions necessary for implementing functions in the second aspect. The processor may execute the computer program or instructions stored in the memory. When the computer program or instructions are executed, the communication apparatus is enabled to implement the method in any possible design of the second aspect.

In a possible design, the communication apparatus includes a processor and a memory. The memory may store a computer program or instructions necessary for implementing functions in the second aspect. The processor may execute the computer program or instructions stored in the memory. When the computer program or instructions are executed, the communication apparatus is enabled to implement the method in any possible design of the second aspect.

In a possible design, the communication apparatus includes a processor and an interface circuit. The processor is configured to communicate with another apparatus through the interface circuit, and perform the method in any possible design of the second aspect.

According to a sixth aspect, this application provides a communication apparatus. The communication apparatus may be an access network node or a module (for example, a circuit, a chip, a chip system, or a processor) in an access network node; or may be a logical node, a logical module, or software that can implement all or some functions of an access network node. The communication apparatus has a function of implementing the third aspect. For example, the communication apparatus includes a corresponding module, unit, or means for performing the operations in the third aspect. The module, the unit, or the means may be implemented by software, may be implemented by hardware, or may be implemented by hardware executing corresponding software.

In a possible design, the communication apparatus includes a processing unit. Optionally, the communication apparatus further includes an interface unit. The interface unit may be configured to send and receive signals to implement communication between the communication apparatus and another apparatus. The processing unit may be configured to perform some internal operations of the communication apparatus. Functions performed by the processing unit and the interface unit may correspond to the operations in the third aspect.

In a possible design, the communication apparatus includes a processor, and the processor may be configured to couple to a memory. The memory may store a computer program or instructions necessary for implementing functions in the third aspect. The processor may execute the computer program or instructions stored in the memory. When the computer program or instructions are executed, the communication apparatus is enabled to implement the method in any possible design of the third aspect.

In a possible design, the communication apparatus includes a processor and a memory. The memory may store a computer program or instructions necessary for implementing functions in the third aspect. The processor may execute the computer program or instructions stored in the memory. When the computer program or instructions are executed, the communication apparatus is enabled to implement the method in any possible design of the third aspect.

In a possible design, the communication apparatus includes a processor and an interface circuit. The processor is configured to communicate with another apparatus through the interface circuit, and perform the method in any possible design of the third aspect.

It may be understood that in the fourth aspect or the fifth aspect or the sixth aspect, the processor may be implemented by hardware or software. When implemented by hardware, the processor may be a logic circuit, an integrated circuit, or the like. When implemented by software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into a same chip, or may be disposed on different chips. A type of the memory and a manner in which the memory and the processor are disposed are not limited in this embodiment of this application.

According to a seventh aspect, this application provides a communication system. The communication system may include at least two of the following: the communication apparatus according to the fourth aspect, the communication apparatus according to the fifth aspect, or the communication apparatus according to the sixth aspect. For example, the communication system includes a terminal and an access network node. The terminal is configured to perform the communication method according to the first aspect, and the access network node is configured to perform the communication method according to the second aspect; or the terminal is configured to perform the communication method according to the first aspect, and the access network node is configured to perform the communication method according to the third aspect. For another example, the communication system includes a terminal, a first access network node, and a second access network node. The terminal is configured to perform the communication method according to the first aspect, the first access network node is configured to perform the communication method according to the second aspect, and the second access network node is configured to perform the communication method according to the third aspect.

According to an eighth aspect, this application provides a computer-readable storage medium. The computer storage medium stores a computer program or instructions. When the computer program or instructions are executed, the method in any possible design of any one of the first aspect to the third aspect is implemented.

According to a ninth aspect, this application provides a computer program product. The computer program product includes computer program code. When the computer program code is run, the method in any possible design of any one of the first aspect to the third aspect is implemented.

According to a tenth aspect, this application provides a chip. The chip is configured to read a computer program stored in a memory to perform the method in any possible design of any one of the first aspect to the third aspect. For example, the chip may include a processor, and the processor may be configured to read the computer program stored in the memory, so that the chip implements the method in any possible design of any one of the first aspect to the third aspect.

Optionally, the chip may include a memory. The memory may be configured to store a computer program. When the computer program is executed, the method in any possible design of any one of the first aspect to the third aspect may be implemented.

For technical effects that can be achieved in any one of the third aspect to the tenth aspect, refer to descriptions of technical effects that can be achieved in any possible design of either the first aspect or the second aspect. Details are not described herein again.

### BRIEF DESCRIPTION OF DRAWINGS

FIG. 1 is a diagram of an architecture of a communication system according to an embodiment of this application;
FIG. 2 is a diagram of dual connectivity according to an embodiment of this application;
FIG. 3 is a diagram of coverage of an access network node according to an embodiment of this application;
FIG. 4 is a flowchart of a communication method according to an embodiment of this application;
FIG. 5A to FIG. 5N are diagrams of several application scenarios according to embodiments of this application;
FIG. 6 is a flowchart of another communication method according to an embodiment of this application;
FIG. 7 is a flowchart of still another communication method according to an embodiment of this application;
FIG. 8 is a flowchart of yet another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a fourth generation (4^{th} generation, 4G) mobile communication system (for example, a long term evolution (long term evolution, LTE) system), a fifth generation (5^{th} generation, 5G) mobile communication system (for example, a new radio (new radio, NR) system), and a future evolved communication system (for example, a sixth generation (6^{th} generation, 6G) mobile communication system).

All aspects, embodiments, or features are presented in this application by describing a system that may include a plurality of devices, components, modules, and the like. It should be appreciated and understood that each system may include another device, component, module, and the like, and/or may not include all of devices, components, modules, and the like described with reference to the accompanying drawings. In addition, a combination of these solutions may be used.

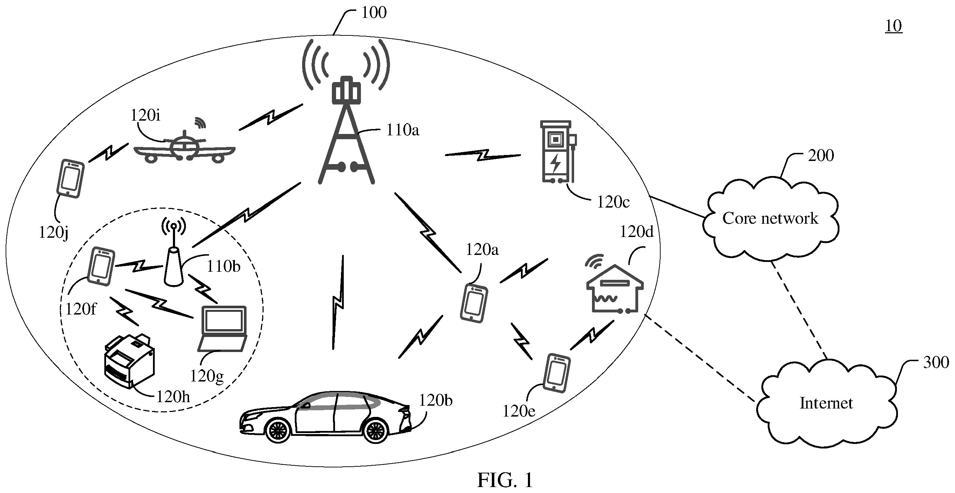

For ease of understanding embodiments of this application, FIG. 1 is a diagram of a possible and non-limiting system. As shown in FIG. 1, a communication system 10 includes a radio access network (radio access network, RAN) 100 and a core network (core network, CN) 200. Optionally, the communication system 10 may further include an internet 300.

The RAN 100 includes at least one RAN node (for example, 110a and 110b in FIG. 1, which may be collectively referred to as 110) and at least one terminal (for example, 120a to 120j in FIG. 1, which may be collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to a third generation partnership project (3^{rd} generation partnership project, 3GPP), for example, a 4G or 5G mobile communication system, or a future-oriented evolved system (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

The RAN node 110 sometimes may also be referred to as a RAN entity, an access node, or the like, and forms a part of the communication system to help a terminal implement radio access. A plurality of RAN nodes 110 in the communication system 10 may be nodes of a same type, or may be nodes of different types. In some scenarios, roles of the RAN node 110 and the terminal 120 may be relative. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for a base station 110a, the network element 120i is a terminal. Both the RAN node 110 and the terminal 120 sometimes are referred to as communication apparatuses. For example, the network elements 110a and 110b in FIG. 1 may be understood as communication apparatuses having a base station function, and the network elements 120a to 120j may be understood as communication apparatuses having a terminal function.

The RAN node may further have different expressions, for example, an access network node or an access network device. In this application, unless otherwise specified, the access network node is used for expression.

In a possible scenario, the access network node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network node may be a macro base station (for example, 110a in FIG. 1), a micro base station or an indoor station (for example, 110b in FIG. 1), a relay node or a donor node, or a radio controller in a CRAN scenario. Optionally, the access network node may alternatively be a server, a wearable device, a vehicle, a vehicle-mounted device, or the like. For example, an access network node in a vehicle to everything (vehicle to everything, V2X) technology may be a road side unit (road side unit, RSU). All or some functions of the access network node in this application may alternatively be implemented by a software function running on hardware, or may be implemented by a virtualization function instantiated on a platform (for example, a cloud platform). The access network node in this application may alternatively be a logical node, a logical module, or software that can implement all or some functions of the access network node.

In another possible scenario, a plurality of access network nodes cooperate to assist the terminal in implementing radio access, and different access network nodes respectively implement some functions of a base station. For example, the access network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-UP, O-CU-UP), and the RU may also be referred to as an open RU (open RU, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

The communication system and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

The following first explains and describes related terms in embodiments of this application. It should be noted that these explanations are intended to make embodiments of this application easier to understand, but should not be considered as limitations on the protection scope claimed in this application.

### (1) Dual connectivity

In a dual connectivity scenario, connections exist between two access network nodes and a terminal. In this way, the two access network nodes can simultaneously provide a data transmission service for one terminal. The two access network nodes may be in a same standard. For example, the two access network nodes may be LTE base stations, NR base stations, or 6G base stations. Alternatively, the two access network nodes may be in different standards. For example, the two access network nodes may include an LTE base station and an NR base station. For another example, the two access network nodes may include an NR base station and a 6G base station. In addition, the two access network nodes may share a site address, or may not share a site address. In the two access network nodes, an access network node carrying a control plane connection may be a master station, and the other access network node may be a secondary station.

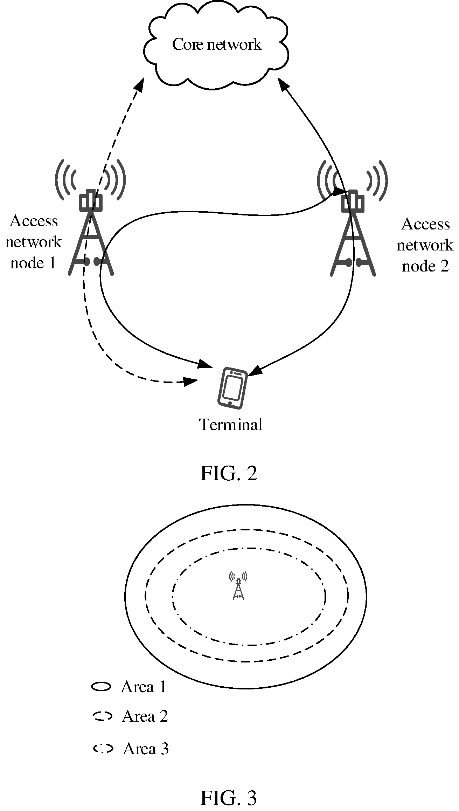

FIG. 2 shows a possible structure of dual connectivity. In FIG. 2, a dashed line represents a control plane connection between a terminal and a network side node, and a solid line represents a data link between the terminal and the network side node. Therefore, in the scenario shown in FIG. 2, an access network node 1 is a master station, and an access network node 2 is a secondary station. The data link may be an offloading bearer, and both an air interface of the master station and an air interface of the secondary station may be used for data transmission, thereby improving a data transmission rate.

### (2) Time unit

The time unit may be a unit of a time domain resource. For example, the time unit may include at least one of the following: a system frame, a subframe (subframe), a slot (slot), a symbol, or the like. The symbol may be a time domain symbol (for example, an orthogonal frequency division multiplexing (orthogonal frequency division multiplexing, OFDM) symbol) or the like.

(3) In this application, that two time units overlap in time domain may be that the two time units completely overlap or partially overlap in time domain.

(4) In this application, a time unit in a first access network node may be replaced with the time unit in a first cell corresponding to the first access network node. For example, an n^{th} time unit in the first access network node may be replaced with the n^{th} time unit in the first cell corresponding to the first access network node, where n may be a positive integer. The first cell may be a cell that is in the first access network node and that provides a service for the terminal.

A time unit in a second access network node may be replaced with the time unit in a second cell corresponding to the second access network node. For example, an m^{th} time unit in the second access network node may be replaced with the m^{th} time unit in the second cell corresponding to the second access network node, where m may be a positive integer. The second cell may be a cell that is in the second access network node and that provides a service for the terminal.

(5) In this application, if a difference between slot boundaries of the first cell and the second cell in time domain does not exceed a time difference threshold, air interface times of the first cell and the second cell are synchronized; or if a difference between slot boundaries of the first cell and the second cell in time domain exceeds a time difference threshold, air interface times of the first cell and the second cell are not synchronized. The difference between the slot boundaries in time domain may be a time-domain difference between boundaries of slots that are in the first cell and the second cell in time domain and that overlap in time domain. For example, a slot 1 in the first cell and a slot 2 in the second cell overlap, and the difference between the slot boundaries in time domain may be a difference between a boundary of the slot 1 in the first cell and a boundary of the slot 2 in the second cell in time domain. The time difference threshold is, for example, 33 microseconds.

(6) In the following descriptions of this application, "sending information to a device (for example, a terminal)" may be understood as that a destination end of the information may be the device, and may include directly or indirectly sending the information to the device. "Receiving information from a device (for example, a terminal)" or "receiving information that is from a device (for example, a terminal)" may be understood as that a source end of the information may be the device, and may include directly or indirectly receiving the information from the device. Information may undergo necessary processing, for example, a format change, between the source end for sending the information and the destination end. However, the destination end may understand valid information from the source end. Similar descriptions in this application may be understood similarly. Details are not described herein again.

Currently, in some scenarios, for example, in a dual-connectivity scenario, uplink communication quality between the terminal and the master station may be different from uplink communication quality between the terminal and the secondary station. For example, the uplink communication quality between the terminal and the master station is relatively good, and the uplink communication quality between the terminal and the secondary station is relatively poor or even interrupted. It should be understood that the master station and the secondary station in this example may alternatively be replaced with each other.

The following uses a high and low frequency deployment scenario as an example for description. In this scenario, the terminal communicates with the master station by using a low frequency signal, so that coverage of uplink information sent by the terminal to the master station can be increased, and the uplink communication quality between the terminal and the master station is improved. The terminal communicates with the secondary station by using a high frequency signal, so that a transmission rate between the terminal and the secondary station can be increased. However, because a path loss of the high frequency signal is severer, coverage of uplink information sent by the terminal to the secondary station is reduced. For example, as shown in FIG. 3, a terminal in an area 1 may receive downlink information sent by a secondary station, the secondary station may receive uplink information sent by a single-connectivity terminal in an area 2, and the secondary station may receive uplink information sent by a dual-connectivity terminal in an area 3. The area 1 is greater than the area 2, and the area 2 is greater than the area 3. In this way, when a dual-connectivity terminal that belongs to the area 1 but does not belong to the area 3 sends uplink information, the secondary station cannot receive the uplink information, affecting uplink communication between the terminal and the secondary station.

How to improve uplink communication quality between a terminal and an access network node needs to be further studied.

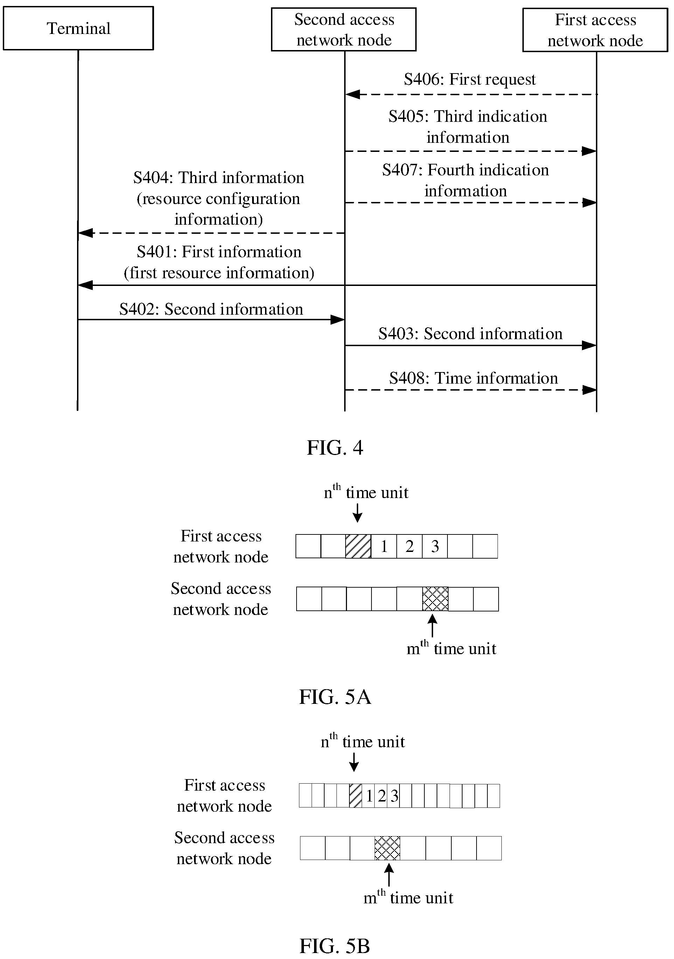

In view of this, embodiments of this application provide a communication method. FIG. 4 is a schematic flowchart corresponding to a communication method according to an embodiment of this application. An application scenario of the method is not limited in this application. For example, the method may be applied to a dual-connectivity scenario, or may be applied to another scenario in which uplink communication quality between a terminal and an access network node needs to be improved. In the method, a first connection exists between the terminal and a first access network node, and a second connection exists between the terminal and a second access network node. Optionally, one of the first access network node and the second access network node may be a master station, a module (for example, a circuit, a chip, a chip system, or a processor) in a master station, or a logical node, a logical module, or software that can implement all or some functions of a master station. The other may be a secondary station, a module (for example, a circuit, a chip, a chip system, or a processor) in a secondary station, or a logical node, a logical module, or software that can implement all or some functions of a secondary station. As shown in FIG. 4, the method includes the following steps.

S401: The first access network node sends first information to the terminal; and correspondingly, the terminal receives the first information from the first access network node.

In some possible manners, the first access network node may be a base station, and the first access network node serving as the base station may send the first information to the terminal.

In some other possible manners, the first access network node may implement a function of communication with the terminal by using a first node, or in other words, the first node may implement a function of receiving and sending a signal; and the first access network node may further implement a processing function by using a second node. For example, the first node may send the first information to the terminal. Optionally, the first information may be determined by the first node and the second node together, or may be received by the first node from the second node. For example, the first node is an O-DU or a DU, and the second node is an O-CU or a CU.

In this embodiment of this application, the first node and/or the second node may be located in the first access network node, or may be located outside the first access network node. This is not limited herein. In addition, the first node and the second node may be a same device, or may be separate and independent devices. This is not limited therein either.

The first information may include first resource information, the first resource information may be used to determine a first resource, and the first resource may be an uplink resource of the second access network node. In this way, the first access network node may schedule an uplink resource of the second access network node for the terminal. Correspondingly, after receiving the first information, the terminal may determine the first resource based on the first resource information, that is, determine a resource of the second access network node that can be scheduled by the first access network node for the terminal. The first information is, for example, DCI, and the first information may be carried on a downlink physical channel resource (for example, a physical downlink control channel (physical downlink control channel, PDCCH) resource) of the first access network node. The first resource information is used to determine specific content of the first resource. This will be described in the following manner b1 and manner b2. Details are not described herein.

In some possible manners, the first information may indicate that the first resource is used for communication between the terminal and the second access network node (in other words, the first resource may be an uplink resource of the second access network node). In this way, after receiving the first information, the terminal may determine that the first resource is used for communication between the terminal and the second access network node, and may communicate with the second access network node by using the first resource.

In some examples, a format (format) of the first information may indicate that the first resource is used for communication between the terminal and the second access network node. For example, the first information is DCI. When a format of the DCI is a format 1, the first resource is used for communication between the terminal and the second access network node.

In some other examples, first indication information in the first information may indicate that the first resource is used for communication between the terminal and the second access network node. The first indication information may explicitly indicate that the first resource is used for communication between the terminal and the second access network node. For example, when a value of the first indication information is a value 1 (for example, 0 or 1), the first resource is used for communication between the terminal and the second access network node. Alternatively, the first indication information may implicitly indicate that the first resource is used for communication between the terminal and the second access network node. For example, the first indication information is information having a correspondence with information indicating that the first resource is used for communication between the terminal and the second access network node.

S402: The terminal sends second information to the second access network node by using (or using or through or based on) the first resource, or in other words, the terminal sends second information to the second access network node on the first resource; and correspondingly, the second access network node receives the second information from the terminal. A destination receiving device of the second information may be the first access network node.

In some possible manners, the second access network node may be a base station, and the terminal may send the second information to the second access network node as the base station by using (or using or through or based on) the first resource.

In some other possible manners, the second access network node may implement a function of communication with the terminal by using a third node, or in other words, the third node may implement a function of receiving and sending a signal; and the second access network node may further implement a processing function by using a fourth node. For example, the third node may receive the second information from the terminal. Optionally, the third node may send the second information to the fourth node, and the fourth node processes the second information. For example, the fourth node may determine that the destination receiving device of the second information is the first access network node. For example, the third node is an O-DU or a DU, and the fourth node is an O-CU or a CU.

In this embodiment of this application, the third node and/or the fourth node may be located in the second access network node, or may be located outside the second access network node. This is not limited herein. In addition, the third node and the fourth node may be a same device, or may be separate and independent devices. This is not limited therein either.

The second information may include data and/or control information. The control information may be control information of a physical layer. For example, the control information includes hybrid automatic repeat request (hybrid automatic repeat request, HARQ) feedback information. The HARQ feedback information may indicate whether the terminal successfully receives (or decodes) data from the first access network node. For another example, the control information may include channel state information (channel state information, CSI) measured by the terminal, and the CSI may be used to determine a state of a channel between the terminal and the first access network node.

After receiving the second information, the second access network node may determine, in a plurality of manners, that the destination receiving device of the second information is the first access network node, or in other words, the second access network node may determine, in a plurality of manners, to forward the second information to the first access network node. The plurality of manners are, for example, a manner a1 and a manner a2.

Manner a1: The second information may indicate that the destination receiving device of the second information is the first access network node, or the second information may indicate the second access network node to forward the second information to the first access network node. In this way, after receiving the second information, the second access network node may determine to forward the second information to the first access network node.

In some examples, a format of the second information may indicate that the destination receiving device of the second information is the first access network node. For example, the second information may be uplink control information (uplink control information, UCI). When a format of the UCI is a format 2, the destination receiving device of the UCI is the first access network node.

In some other examples, second indication information in the second information may indicate that the destination receiving device of the second information is the first access network node. The second indication information may explicitly indicate that the destination receiving device of the second information is the first access network node. For example, when a value of the second indication information is a value 2 (for example, 0 or 1), the destination receiving device of the second information is the first access network node. Alternatively, the second indication information may implicitly indicate that the destination receiving device of the second information is the first access network node. For example, the second indication information is information having a correspondence with information whose destination receiving device of the second information is the first access network node.

In the manner a1, the second access network node can quickly and accurately determine, based on the second information, that the destination receiving device of the second information is the first access network node.

Manner a2: The first resource is dedicated to transmitting the information indicating that destination receiving device is the first access network node. In this way, when the terminal sends the second information to the second access network node by using the first resource, the second access network node may determine, based on the first resource, that the destination receiving device of the second information is the first access network node.

For example, each resource in a first resource set may be a resource of the second access network node, and is dedicated to transmitting the information whose destination receiving device is the first access network node. The terminal sends the second information to the second access network node by using the first resource. If the second access network node determines that the first resource belongs to the first resource set, the second access network node may determine that the destination receiving device of the second information is the first access network node.

In the manner a2, the second access network node can quickly and accurately determine, based on the first resource, that the destination receiving device of the second information is the first access network node. In this way, the terminal does not need to indicate, by using additional information, that the destination receiving device of the second information is the first access network node, thereby reducing signaling overheads.

S403: The second access network node sends the second information to the first access network node; and correspondingly, the first access network node receives the second information from the first access network node.

For example, the second access network node may send the second information to the first access network node through an interface between the second access network node and the first access network node. A transmission delay on the interface between the first access network node and the second access network node may be less than a delay threshold, so that a transmission delay of the second information can be reduced. The delay threshold may be preset, for example, specified in a protocol, or may be determined by the first access network node, the second access network node, or a core network.

In some possible manners, the first access network node and the second access network node may be base stations, and the second access network node may send the second information to the first access network node by using an interface between the base stations.

In some other possible manners, the first access network node may implement a communication function with the terminal by using the first node (for example, a DU or an O-DU), and implement a processing function by using the second node (for example, a CU or an O-CU). The second access network node may implement a communication function with the terminal by using the third node (for example, a DU or an O-DU), and implement a processing function by using the fourth node (for example, a CU or an O-CU). For example, the fourth node may send the second information to the second node.

Optionally, S402 and S403 may alternatively be replaced with the following: The terminal sends the second information to the first access network node by using (or using or through or based on) the first resource and the second access network node, or in other words, the terminal sends the second information to the first access network node and the second access network node, where a resource that is used to carry the second information and that is between the terminal and the second access network node may be the first resource. Correspondingly, the first access network node receives the second information from the terminal by using the second access network node, or the first access network node receives the second information that is from the terminal and that is forwarded by the second access network node.

According to the method shown in FIG. 4, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience.

As described above, the first resource information may be used to determine the first resource, and there are a plurality of determining manners, for example, a manner b1 and/or a manner b2.

Manner b1: The first resource information and second resource information may be used to determine a first resource. In this way, the terminal can determine the first resource based on the first resource information and the second resource information.

The first resource information and the second resource information may be carried in a same message. For example, both the first resource information and the second resource information are included in the first information. Alternatively, the first resource information and the second resource information may be carried in different messages.

The second resource information may indicate (or schedule or determine) a second resource, and the second resource may be a downlink resource between the second access network node and the terminal (in other words, the second resource may be a downlink resource of the second access network node). In this way, the terminal may determine the first resource based on the first resource information and the second resource, in other words, the first resource information and the second resource may be used to determine the first resource. A manner in which the second resource information indicates the second resource is not limited in this application. Optionally, the downlink resource may be used by the second access network node to send downlink data to the terminal.

In some possible manners, the first resource information may indicate a first value, a time unit in which the second resource is located may be a first time unit, and the first value and the first time unit may be used to determine the first resource. In this way, the terminal can determine the first resource based on the first value and the first time unit. A manner in which the first resource information indicates the first value may be explicit. For example, the first resource information includes the first value. Alternatively, a manner in which the first resource information indicates the first value may be implicit. For example, the first resource information includes information having a correspondence with the first value. The time unit in which the second resource is located may include one or more time units, and the first time unit may be one of the one or more time units. For example, the first time unit is the last one of the one or more time units.

For example, the first value and the first time unit may be used to determine a second time unit, and the second time unit may be a time unit in which the first resource is located. Therefore, the second time unit may be used to determine the first resource. In this way, the terminal may determine the second time unit based on the first value and the first time unit, and determine the first resource based on the second time unit.

In some implementations, an uplink resource exists in the second time unit. For example, an uplink resource of the second access network node exists in the second time unit. In this way, the terminal may determine, based on the first value and the first time unit, the second time unit in which the uplink resource exists, thereby improving validity of determining the first resource based on the second time unit. Optionally, the uplink resource used to transmit the information whose destination receiving device is the first access network node may exist in the second time unit. In this way, the terminal may send information to the first access network node by using the second access network node and the uplink resource in the second time unit.

The first value and the first time unit may be used to determine the second time unit in a plurality of manners, for example, a manner c1 and a manner c2.

Manner c1: The first value may be k, and k may be a positive integer. The first time unit may be an n^{th} time unit in the first access network node. The second time unit may be an m^{th} time unit in the second access network node, and m may be an integer. The m^{th} time unit overlaps an (n+k)^{th} time unit in the first access network node in time domain. In other words, the terminal may first determine the (n+k)^{th} time unit in the first access network node, and then map the (n+k)^{th} time unit to the second access network node to obtain the m^{th} time unit in the second access network node. In the manner c1, the terminal can quickly and accurately determine the second time unit.

In some implementations (referred to as an implementation a1 below), in the second access network node, there is one time unit (referred to as a time unit a below) overlapping the (n+k)^{th} time unit in the first access network node in time domain. The m^{th} time unit may be the time unit a. With reference to a scenario 1 to a scenario 3, the following describes the implementation a1 by using an example in which k is 3.

Scenario 1: A first cell and a second cell have a same subcarrier spacing, and air interface times of the first cell and the second cell are synchronized. The first cell corresponds to the first access network node, and may be a cell that is in the first access network node and that provides a service for the terminal. The second cell corresponds to the second access network node, and may be a cell that is in the second access network node and that provides a service for the terminal.

As shown in FIG. 5A, in the scenario 1, the n^{th} time unit in the first access network node may be the 3^{rd} time unit in the first access network node, and the (n+k)^{th} time unit in the first access network node may be the 6^{th} time unit in the first access network node. The 6^{th} time unit in the second access network node overlaps the 6^{th} time unit in the first access network node in time domain. Therefore, the m^{th} time unit may be the 6^{th} time unit in the second access network node.

Scenario 2: A subcarrier spacing of the first cell is greater than a subcarrier spacing of the second cell (in other words, a length of a time unit in the first cell is less than a length of a time unit in the second cell), and air interface times of the first cell and the second cell are synchronized. For specific content of the first cell and the second cell, respectively refer to the descriptions of the first cell and the second cell in the scenario 1. Details are not described herein again.

As shown in FIG. 5B, in the scenario 2, the n^{th} time unit in the first access network node may be the 5^{th} time unit in the first access network node, and the (n+k)^{th} time unit in the first access network node may be the 8^{th} time unit in the first access network node. The 4^{th} time unit in the second access network node overlaps the 8^{th} time unit in the first access network node in time domain. Therefore, the m^{th} time unit may be the 4^{th} time unit in the second access network node.

Scenario 3: A subcarrier spacing of the first cell is greater than a subcarrier spacing of the second cell (in other words, a length of a time unit in the first cell is less than a length of a time unit in the second cell), and air interface times of the first cell and the second cell are not synchronized. For specific content of the first cell and the second cell, respectively refer to the descriptions of the first cell and the second cell in the scenario 1. Details are not described herein again.

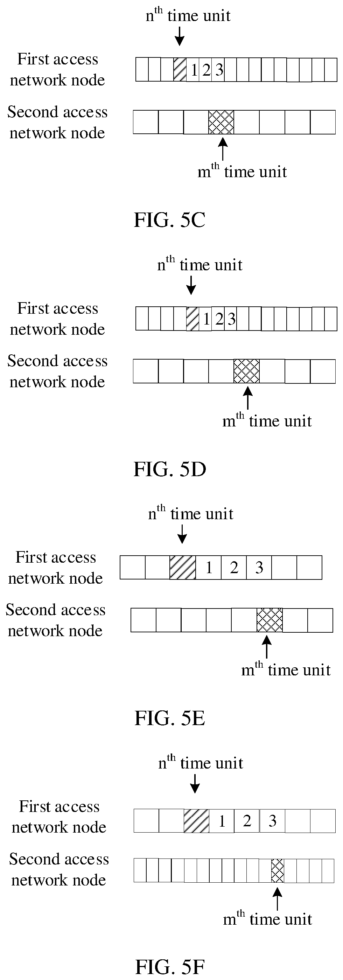

As shown in FIG. 5C, in the scenario 3, the n^{th} time unit in the first access network node may be the 4^{th} time unit in the first access network node, and the (n+k)^{th} time unit in the first access network node may be the 7^{th} time unit in the first access network node. The 4^{th} time unit in the second access network node overlaps the 7^{th} time unit in the first access network node in time domain. Therefore, the m^{th} time unit may be the 4^{th} time unit in the second access network node.

In some other implementations (referred to as an implementation a2 below), P time units in the second access network node overlap the (n+k)^{th} time unit in the first access network node in time domain, P may be an integer greater than or equal to 2, and the m^{th} time unit belongs to the P time units. In this way, when a plurality of time units in the second access network node overlap the (n+k)^{th} time unit in the first access network node in time domain, the terminal can quickly determine the m^{th} time unit.

For example, the m^{th} time unit may be at least one of the following (1) to (6).
(1) An i^{th} time unit in the P time units, where i may be an integer from 1 to P. In some examples, a value of i may be preset, for example, specified in a protocol, or may be configured by a network side node (for example, the first access network node or the second access network node) for the terminal. For example, i may be 1 or P. In some other examples, the i^{th} time unit may be a time unit meeting a first specified condition in the P time units. For example, the i^{th} time unit may be a time unit that is in the P time units and that completely overlaps the (n+k)^{th} time unit. For example, the P time units include a time unit 1 to a time unit 3, the time unit 1 and the time unit 3 partially overlap the (n+k)^{th} time unit, and the time unit 2 completely overlaps the (n+k)^{th} time unit. The i^{th} time unit may be the time unit 2.
(2) A time unit that is in the P time units and that has a largest overlapping range with the (n+k)^{th} time unit in time domain. For example, the P time units include a time unit 1 to a time unit 3, and an ascending order of overlapping ranges between the time unit 1 to the time unit 3 and the (n+k)^{th} time unit in time domain is: the time unit 1, the time unit 2, and the time unit 3. The m^{th} time unit is the time unit 3.
(3) A time unit that is in the P time units and that has a smallest overlapping range with the (n+k)^{th} time unit in time domain. For example, the P time units include a time unit 1 to a time unit 3, and an ascending order of overlapping ranges between the time unit 1 to the time unit 3 and the (n+k)^{th} time unit in time domain is: the time unit 1, the time unit 2, and the time unit 3. The m^{th} time unit is the time unit 1.
(4) A j^{th} time unit in Q time units in the P time units. Q may be a positive integer, j may be an integer from 1 to Q, and an uplink resource used to transmit information whose destination receiving device is the first access network node exists in any one of the Q time units. In some examples, a value of j may be preset, for example, specified in a protocol, or may be configured by a network side node (for example, the first access network node or the second access network node) for the terminal. For example, j may be 1 or Q. In some other examples, the j^{th} time unit may be a time unit meeting a second specified condition in the Q time units. For example, the j^{th} time unit may be a time unit that is in the Q time units and that completely overlaps the (n+k)^{th} time unit. For example, the Q time units include a time unit 1 to a time unit 2, the time unit 1 partially overlaps the (n+k)^{th} time unit, and the time unit 2 completely overlaps the (n+k)^{th} time unit. The j^{th} time unit is the time unit 2.
(5) A time unit that is in Q time units and that has a largest overlapping range with the (n+k)^{th} time unit in time domain. For example, the Q time units include a time unit 1 to a time unit 2, and an ascending order of overlapping ranges between the time unit 1 to the time unit 2 and the (n+k)^{th} time unit in time domain is: the time unit 1 and the time unit 2. The m^{th} time unit is the time unit 2.
(6) A time unit that is in Q time units and that has a smallest overlapping range with the (n+k)^{th} time unit in time domain. For example, the Q time units include a time unit 1 to a time unit 2, and an ascending order of overlapping ranges between the time unit 1 to the time unit 2 and the (n+k)^{th} time unit in time domain is: the time unit 1 and the time unit 2. The m^{th} time unit is the time unit 1.

Optionally, if there are a plurality of time units in (2), (3), (5), or (6), the m^{th} time unit may be one of the plurality of time units. The following uses (2) as an example for description. It should be understood that a similar manner may also be used in (3), (5), and (6). Among the P time units, if there are S time units having a largest overlapping range with the (n+k)^{th} time unit in time domain, and S is an integer greater than or equal to 2, the m^{th} time unit may be a b^{th} time unit in the S time units, and b may be an integer from 1 to S. In some examples, a value of b may be preset, for example, specified in a protocol, or may be configured by a network side node (for example, the first access network node or the second access network node) for the terminal. For example, b may be 1 or S. In some other examples, the b^{th} time unit is a time unit meeting a third specified condition in the S time units. For example, the b^{th} time unit is a time unit that is in the S time units and that completely overlaps the (n+k)^{th} time unit. For example, the S time units include a time unit 1 to a time unit 2, the time unit 1 partially overlaps the (n+k)^{th} time unit, and the time unit 2 completely overlaps the (n+k)^{th} time unit. The b^{th} time unit is the time unit 2.

With reference to a scenario 3 to a scenario 6, the following describes the implementation a2 by using an example in which k is 3.

Scenario 3: A subcarrier spacing of the first cell is greater than a subcarrier spacing of the second cell, and air interface times of the first cell and the second cell are not synchronized. For specific content, refer to the foregoing description of the scenario 3. Details are not described herein again.

As shown in FIG. 5D, in the scenario 3, the n^{th} time unit in the first access network node may be the 5^{th} time unit in the first access network node, and the (n+k)^{th} time unit in the first access network node may be the 8^{th} time unit in the first access network node. The 4^{th} to the 5^{th} time units in the second access network node overlap the 8^{th} time unit in the first access network node in time domain. Therefore, the m^{th} time unit may be one of the 4^{th} to the 5^{th} time units in the second access network node. For example, the m^{th} time unit is the 1^{st} time unit in the 4^{th} to the 5^{th} time units in the second access network node, that is, the 4^{th} time unit in the second access network node. For another example, as shown in FIG. 5D, the m^{th} time unit is the last time unit in the 4^{th} to the 5^{th} time units in the second access network node, that is, the 5^{th} time unit in the second access network node. For still another example, the m^{th} time unit is a time unit that is in the 4^{th} to the 5^{th} time units in the second access network node and that has a largest or smallest overlapping range with the 8^{th} time unit in the first access network node in time domain. For yet another example, the m^{th} time unit is a time unit that is in the 4^{th} to the 5^{th} time units in the second access network node and in which an uplink resource (for example, a physical uplink control channel (physical uplink control channel, PUCCH) resource) exists. For yet another example, the m^{th} time unit is a time unit that is in the 4^{th} to the 5^{th} time units in the second access network node and in which an uplink resource (for example, a PUCCH resource) used to transmit information whose destination receiving device is the first access network node exists.

Scenario 4: A first cell and a second cell have a same subcarrier spacing, and air interface times of the first cell and the second cell are not synchronized. For specific content of the first cell and the second cell, respectively refer to the descriptions of the first cell and the second cell in the scenario 1. Details are not described herein again.

As shown in FIG. 5E, in the scenario 4, the n^{th} time unit in the first access network node may be the 3^{rd} time unit in the first access network node, and the (n+k)^{th} time unit in the first access network node may be the 6^{th} time unit in the first access network node. The 5^{th} to the 6^{th} time units in the second access network node overlap the 6^{th} time unit in the first access network node in time domain. Therefore, the m^{th} time unit may be one of the 5^{th} to the 6^{th} time units in the second access network node. For example, the m^{th} time unit is the 1^{st} time unit in the 5^{th} to the 6^{th} time units in the second access network node, that is, the 5^{th} time unit in the second access network node. For another example, as shown in FIG. 5E, the m^{th} time unit is the last time unit in the 5^{th} to the 6^{th} time units in the second access network node, that is, the 6^{th} time unit in the second access network node. For still another example, the m^{th} time unit is a time unit that is in the 5^{th} to the 6^{th} time units in the second access network node and that has a largest or smallest overlapping range with the 6^{th} time unit in the first access network node in time domain. For yet another example, the m^{th} time unit is a time unit that is in the 5^{th} to the 6^{th} time units in the second access network node and in which an uplink resource (for example, a PUCCH resource) exists. For yet another example, the m^{th} time unit is a time unit that is in the 5^{th} to the 6^{th} time units in the second access network node and in which an uplink resource (for example, a PUCCH resource) used to transmit information whose destination receiving device is the first access network node exists.

Scenario 5: A subcarrier spacing of the first cell is less than a subcarrier spacing of the second cell (in other words, a length of a time unit in the first cell is greater than a length of a time unit in the second cell), and air interface times of the first cell and the second cell are synchronized. For specific content of the first cell and the second cell, respectively refer to the descriptions of the first cell and the second cell in the scenario 1. Details are not described herein again.

As shown in FIG. 5F, in the scenario 5, the n^{th} time unit in the first access network node may be the 3^{rd} time unit in the first access network node, and the (n+k)^{th} time unit in the first access network node may be the 6^{th} time unit in the first access network node. The 11^{th} to the 12^{th} time units in the second access network node overlap the 6^{th} time unit in the first access network node in time domain. Therefore, the m^{th} time unit may be one of the 11^{th} to the 12^{th} time units in the second access network node. For example, the m^{th} time unit is the 1^{st} time unit in the 11^{th} to the 12^{th} time units in the second access network node, that is, the 11^{th} time unit in the second access network node. For another example, as shown in FIG. 5F, the m^{th} time unit is the last time unit in the 11^{th} to the 12^{th} time units in the second access network node, that is, the 12^{th} time unit in the second access network node. For still another example, the m^{th} time unit is a time unit that is in the 11^{th} to the 12^{th} time units in the second access network node and that has a largest or smallest overlapping range with the 6^{th} time unit in the first access network node in time domain. For yet another example, the m^{th} time unit is a time unit that is in the 11^{th} to the 12^{th} time units in the second access network node and in which an uplink resource (for example, a PUCCH resource) exists. For yet another example, the m^{th} time unit is a time unit that is in the 11^{th} to the 12^{th} time units in the second access network node and in which an uplink resource (for example, a PUCCH resource) used to transmit information whose destination receiving device is the first access network node exists.

Scenario 6: A subcarrier spacing of the first cell is less than a subcarrier spacing of the second cell (in other words, a length of a time unit in the first cell is greater than a length of a time unit in the second cell), and air interface times of the first cell and the second cell are not synchronized. For specific content of the first cell and the second cell, respectively refer to the descriptions of the first cell and the second cell in the scenario 1. Details are not described herein again.

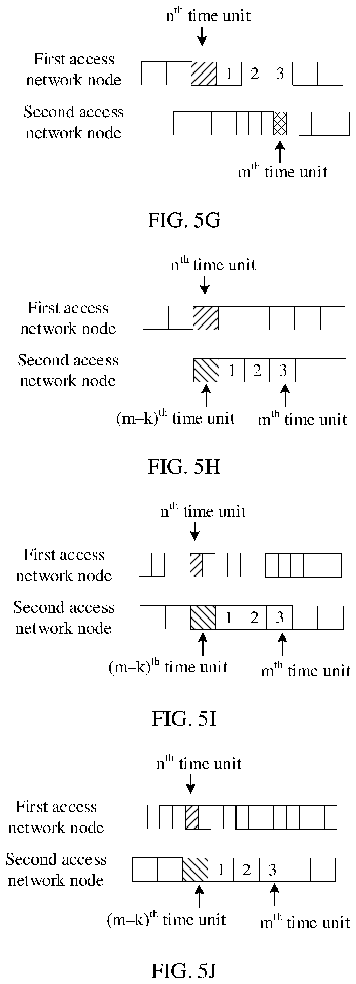

As shown in FIG. 5G, in the scenario 6, the n^{th} time unit in the first access network node may be the 3^{rd} time unit in the first access network node, and the (n+k)^{th} time unit in the first access network node may be the 6^{th} time unit in the first access network node. The 10^{th} to the 12^{th} time units in the second access network node overlap the 6^{th} time unit in the first access network node in time domain. Therefore, the m^{th} time unit may be one of the 10^{th} to the 12^{th} time units in the second access network node. For example, the m^{th} time unit is the 1^{st} time unit in the 10^{th} to the 12^{th} time units in the second access network node, that is, the 10^{th} time unit in the second access network node. For another example, the m^{th} time unit is the last time unit in the 10^{th} to the 12^{th} time units in the second access network node, that is, the 12^{th} time unit in the second access network node. For still another example, the m^{th} time unit is a time unit that is in the 10^{th} to the 12^{th} time units in the second access network node and that has a largest or smallest overlapping range with or that completely overlaps the 6^{th} time unit in the first access network node in time domain. For example, as shown in FIG. 5G, the m^{th} time unit is the 11^{th} time unit in the second access network node. For yet another example, the m^{th} time unit is a time unit that is in the 10^{th} to the 12^{th} time units in the second access network node and in which an uplink resource (for example, a PUCCH resource) exists. For yet another example, the m^{th} time unit is a time unit that is in the 10^{th} to the 12^{th} time units in the second access network node and in which an uplink resource (for example, a PUCCH resource) used to transmit information whose destination receiving device is the first access network node exists.

Manner c2: The first value may be k, and k may be a positive integer. The first time unit may be an n^{th} time unit in the first access network node. The second time unit may be an m^{th} time unit in the second access network node, and m may be an integer. An (m-k)^{th} time unit in the second access network node overlaps the n^{th} time unit in time domain. In other words, the terminal may first map the n^{th} time unit in the first access network node to the second access network node to obtain the (m-k)^{th} time unit in the second access network node, and then determine the m^{th} time unit in the second access network node. In the manner c2, the terminal can quickly and accurately determine the second time unit.

In some implementations (referred to as an implementation b1 below), in the second access network node, there is one time unit (referred to as a time unit b below) overlapping the n^{th} time unit in time domain. The (m-k)^{th} time unit may be the time unit b. With reference to a scenario 1 to a scenario 3, the following describes the implementation b1 by using an example in which k is 3.

Scenario 1: A first cell and a second cell have a same subcarrier spacing, and air interface times of the first cell and the second cell are synchronized. For specific content of the scenario 1, refer to the description of the scenario 1 in the foregoing manner c1. Details are not described herein again.

As shown in FIG. 5H, in the scenario 1, the n^{th} time unit in the first access network node may be the 3^{rd} time unit in the first access network node. The 3^{rd} time unit in the second access network node overlaps the 3^{rd} time unit in the first access network node in time domain. Therefore, the (m-k)^{th} time unit in the second access network node may be the 3^{rd} time unit in the second access network node. The m^{th} time unit may be the 6^{th} time unit in the second access network node.

Scenario 2: A subcarrier spacing of the first cell is greater than a subcarrier spacing of the second cell, and air interface times of the first cell and the second cell are synchronized. For specific content of the scenario 2, refer to the description of the scenario 2 in the foregoing manner c1. Details are not described herein again.

As shown in FIG. 5I, in the scenario 2, the n^{th} time unit in the first access network node may be the 5^{th} time unit in the first access network node. The 3^{rd} time unit in the second access network node overlaps the 5^{th} time unit in the first access network node in time domain. Therefore, the (m-k)^{th} time unit in the second access network node may be the 3^{rd} time unit in the second access network node. The m^{th} time unit may be the 6^{th} time unit in the second access network node.

Scenario 3: A subcarrier spacing of the first cell is greater than a subcarrier spacing of the second cell, and air interface times of the first cell and the second cell are not synchronized. For specific content of the scenario 3, refer to the description of the scenario 3 in the foregoing manner c1. Details are not described herein again.

As shown in FIG. 5J, in the scenario 3, the n^{th} time unit in the first access network node may be the 5^{th} time unit in the first access network node. The 3^{rd} time unit in the second access network node overlaps the 5^{th} time unit in the first access network node in time domain. Therefore, the (m-k)^{th} time unit in the second access network node may be the 3^{rd} time unit in the second access network node. The m^{th} time unit may be the 6^{th} time unit in the second access network node.

In some other implementations (referred to as an implementation b2 below), R time units in the second access network node overlap the n^{th} time unit in time domain, R may be an integer greater than or equal to 2, and the (m-k)^{th} time unit belongs to the R time units. In this way, when a plurality of time units in the second access network node overlap the n^{th} time unit in the first access network node in time domain, the terminal can quickly determine the m^{th} time unit.

For example, the (m-k)^{th} time unit may be at least one of the following (1) to (3).
(1) An a^{th} time unit in the R time units, where a may be an integer from 1 to R. In some examples, a value of a may be preset, for example, specified in a protocol, or may be configured by a network side node (for example, the first access network node or the second access network node) for the terminal. For example, a may be 1 or R. In some other examples, the a^{th} time unit may be a time unit meeting a fourth specified condition in the R time units. For example, the a^{th} time unit may be a time unit that is in the R time units and that completely overlaps the n^{th} time unit. For example, the R time units include a time unit 4 to a time unit 6, the time unit 4 and the time unit 6 partially overlap the n^{th} time unit, and the time unit 5 completely overlaps the n^{th} time unit. The a^{th} time unit is the time unit 5.
(2) A time unit that is in the R time units and that has a largest overlapping range with the n^{th} time unit in time domain. For example, the R time units include a time unit 4 to a time unit 6, and an ascending order of overlapping ranges between the time unit 4 to the time unit 6 and the n^{th} time unit in time domain is: the time unit 4, the time unit 5, and the time unit 6. The m^{th} time unit is the time unit 6.
(3) A time unit that is in the R time units and that has a smallest overlapping range with the n^{th} time unit in time domain. For example, the R time units include a time unit 4 to a time unit 6, and an ascending order of overlapping ranges between the time unit 4 to the time unit 6 and the n^{th} time unit in time domain is: the time unit 4, the time unit 5, and the time unit 6. The m^{th} time unit is the time unit 4.

Optionally, if there are a plurality time units in (2) or (3), the (m-k)^{th} time unit may be one of the plurality of time units. The following uses (2) as an example for description. It should be understood that a similar manner may also be used in (3). Among the R time units, if there are T time units having a largest overlapping range with the n^{th} time unit in time domain, and T may be an integer greater than or equal to 2, the (m-k)^{th} time unit may be a c^{th} time unit in the T time units, and c may be an integer from 1 to T. In some examples, a value of c may be preset, for example, specified in a protocol, or may be configured by a network side node (for example, the first access network node or the second access network node) for the terminal. For example, c may be 1 or T. In some other examples, the c^{th} time unit is a time unit meeting a fifth specified condition in the T time units. For example, the c^{th} time unit is a time unit that is in the T time units and that completely overlaps the n^{th} time unit. For example, the T time units include a time unit 4 to a time unit 5, the time unit 4 partially overlaps the n^{th} time unit, and the time unit 5 completely overlaps the n^{th} time unit. The c^{th} time unit is a time unit 5.

With reference to a scenario 3 to a scenario 6, the following describes the implementation b2 by using an example in which k is 3.

Scenario 3: A subcarrier spacing of the first cell is greater than a subcarrier spacing of the second cell, and air interface times of the first cell and the second cell are not synchronized. For specific content of the scenario 3, refer to the description of the scenario 3 in the foregoing manner c1. Details are not described herein again.

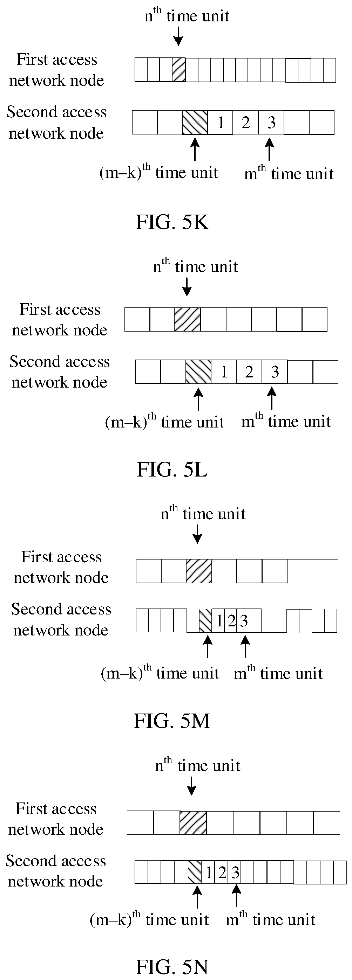

As shown in FIG. 5K, in the scenario 3, the n^{th} time unit in the first access network node may be the 4^{th} time unit in the first access network node. The 2^{nd} to the 3^{rd} time units in the second access network node overlap the 4^{th} time unit in the first access network node in time domain. Therefore, the (m-k)^{th} time unit may be one of the 2^{nd} to the 3^{rd} time units in the second access network node. For example, the (m-k)^{th} time unit is the 1^{st} time unit in the 2^{nd} to the 3^{rd} time units in the second access network node, that is, the 2^{nd} time unit in the second access network node, and the m^{th} time unit in the second access network node is the 5^{th} time unit in the second access network node. For another example, as shown in FIG. 5K, the (m-k)^{th} time unit is the last time unit in the 2^{nd} to the 3^{rd} time units in the second access network node, that is, the 3^{rd} time unit in the second access network node, and the m^{th} time unit is the 6^{th} time unit in the second access network node. For still another example, the (m-k)^{th} time unit is a time unit that is in the 2^{nd} to the 3^{rd} time units in the second access network node and that has a largest or smallest overlapping range with the 4^{th} time unit in the first access network node in time domain.

Scenario 4: A first cell and a second cell have a same subcarrier spacing, and air interface times of the first cell and the second cell are not synchronized. For specific content of the scenario 4, refer to the description of the scenario 4 in the foregoing manner c1. Details are not described herein again.

As shown in FIG. 5L, in the scenario 4, the n^{th} time unit in the first access network node may be the 3^{rd} time unit in the first access network node. The 2^{nd} to the 3^{rd} time units in the second access network node overlap the 3^{rd} time unit in the first access network node in time domain. Therefore, the (m-k)^{th} time unit may be one of the 2^{nd} to the 3^{rd} time units in the second access network node. For example, the (m-k)^{th} time unit is the 1^{st} time unit in the 2^{nd} to the 3^{rd} time units in the second access network node, that is, the 2^{nd} time unit in the second access network node. The m^{th} time unit is the 5^{th} time unit in the second access network node. For another example, as shown in FIG. 5L, the (m-k)^{th} time unit is the last time unit in the 2^{nd} to the 3^{rd} time units in the second access network node, that is, the 3^{rd} time unit in the second access network node. The m^{th} time unit is the 6^{th} time unit in the second access network node. For still another example, the (m-k)^{th} time unit is a time unit that is in the 2^{nd} to the 3^{rd} time units in the second access network node and that has a largest or smallest overlapping range with the 3^{rd} time unit in the first access network node in time domain.

Scenario 5: A subcarrier spacing of the first cell is less than a subcarrier spacing of the second cell, and air interface times of the first cell and the second cell are synchronized. For specific content of the scenario 5, refer to the description of the scenario 5 in the foregoing manner c1. Details are not described herein again.

As shown in FIG. 5M, in the scenario 5, the n^{th} time unit in the first access network node may be the 3^{rd} time unit in the first access network node. The 5^{th} to the 6^{th} time units in the second access network node overlap the 3^{rd} time unit in the first access network node in time domain. Therefore, the (m-k)^{th} time unit may be one of the 5^{th} to the 6^{th} time units in the second access network node. For example, the (m-k)^{th} time unit is the 1^{st} time unit in the 5^{th} to the 6^{th} time units in the second access network node, that is, the 5^{th} time unit in the second access network node. The m^{th} time unit is the 8^{th} time unit in the second access network node. For another example, as shown in FIG. 5M, the (m-k)^{th} time unit is the last time unit in the 5^{th} to the 6^{th} time units in the second access network node, that is, the 6^{th} time unit in the second access network node. The m^{th} time unit is the 9^{th} time unit in the second access network node. For still another example, the (m-k)^{th} time unit is a time unit that is in the 5^{th} to the 6^{th} time units in the second access network node and that has a largest or smallest overlapping range with the 3^{rd} time unit in the first access network node in time domain.

Scenario 6: A subcarrier spacing of the first cell is less than a subcarrier spacing of the second cell, and air interface times of the first cell and the second cell are not synchronized. For specific content of the scenario 6, refer to the description of the scenario 6 in the foregoing manner c1. Details are not described herein again.

As shown in FIG. 5N, in the scenario 6, the n^{th} time unit in the first access network node may be the 3^{rd} time unit in the first access network node. The 5^{th} to the 7^{th} time units in the second access network node overlap the 3^{rd} time unit in the first access network node in time domain. Therefore, the (m-k)^{th} time unit may be one of the 5^{th} to the 7^{th} time units in the second access network node. For example, the (m-k)^{th} time unit is the 1^{st} time unit in the 5^{th} to the 7^{th} time units in the second access network node, that is, the 5^{th} time unit in the second access network node. The m^{th} time unit is the 8^{th} time unit in the second access network node. For another example, the (m-k)^{th} time unit is the last time unit in the 5^{th} to the 7^{th} time units in the second access network node, that is, the 7^{th} time unit in the second access network node. The m^{th} time unit is the 10^{th} time unit in the second access network node. For still another example, the (m-k)^{th} time unit is a time unit that is in the 5^{th} to the 7^{th} time units in the second access network node and that has a largest or smallest overlapping range with or that completely overlaps the 3^{rd} time unit in the first access network node in time domain. For example, as shown in FIG. 5N, the (m-k)^{th} time unit is the 5^{th} time unit in the second access network node, and the m^{th} time unit is the 8^{th} time unit in the second access network node.

In the manner b1, the terminal can quickly and accurately determine the first resource based on the first resource information and the second resource information.

Manner b2: The first resource information and resource configuration information may be used to determine a first resource. In other words, the terminal may determine the first resource, and the first resource may be determined based on the first resource information and the resource configuration information. The resource configuration information may include an uplink resource configuration that is in the second access network node and that is used to transmit the information whose destination receiving device is the first access network node.

The uplink resource configuration may be used to configure a resource in a second resource set. Each resource in the second resource set may be a resource of the second access network node, and may be used to transmit the information whose destination receiving device is the first access network node. Optionally, the uplink resource configuration may include at least one of the following: a time domain position and/or a frequency domain position of one or more resources in the second resource set, or a periodicity of a resource in the second resource set. The first resource information may be used to schedule the first resource in the second resource set. In this way, the terminal can determine the first resource based on the first resource information and the resource configuration information. For example, the second resource set configured by the uplink resource configuration includes uplink resources in a time unit 1, a time unit 5, a time unit 9, and a time unit 13. If the first resource information indicates the time unit 5, the terminal may determine that the first resource may be a resource in the time unit 5 in the second resource set.

Optionally, each resource in the second resource set may be dedicated to transmitting the information whose destination receiving device is the first access network node. In this case, the second resource set may be the first resource set in the foregoing manner a1. Alternatively, each resource in the second resource set may be used to transmit both the information whose destination receiving device is the first access network node and the information whose destination receiving device is the second access network node. For example, the second resource set includes all uplink resources of the second access network node.

Optionally, in the manner b2, the terminal may obtain the resource configuration information through S404.

S404: The second access network node sends third information to the terminal; and correspondingly, the terminal receives the third information from the second access network node.

In some possible manners, the second access network node may be a base station, and the second access network node serving as the base station may send the third information to the terminal.

In some other possible manners, the second access network node may implement a communication function with the terminal by using a third node (for example, a DU or an O-DU), and implement a processing function by using a fourth node (for example, a CU or an O-CU). For example, the third node may send the third information to the terminal. Optionally, the third information may be determined by the third node and the fourth node together, or may be received by the third node from the fourth node.

The third information may include the resource configuration information. For example, a master cell group (master cell group, MCG) configuration and/or a secondary cell group (secondary cell group, SCG) configuration in the third information includes resource configuration information.

For example, the third information may be an RRC message, for example, an RRC reconfiguration message.

Optionally, S404 may be performed before S401.

The terminal can obtain the resource configuration information in time by using this step.

It should be understood that the manner b1 and the manner b2 may be combined.

In some examples, the manner b1 may be used to determine the second time unit in which the first resource is located, that is, a time domain position of the first resource. The second time unit and the uplink resource configuration in the manner b2 may be used to determine a frequency domain position of the first resource, further determining the first resource. For example, in the manner b1, the terminal may determine that the second time unit is the time unit 5. If the first resource set configured by the uplink resource configuration includes uplink resources in the time unit 1, the time unit 5, the time unit 9, and the time unit 13, and a frequency domain position of the uplink resource in the time unit 5 is a resource element (resource element, RE) 2, a time domain position and a frequency domain position of the first resource may be respectively the time unit 5 and the RE 2.

In some other examples, the uplink resource configuration in the manner b2 and the manner b1 may be used to determine the second time unit in which the first resource is located, that is, a time domain position of the first resource. The second time unit and the uplink resource configuration in the manner b2 may be used to determine a frequency domain position of the first resource, further determining the first resource. Optionally, the uplink resource configuration in the manner b2 may be used to determine the Q time units in the manner c1 in the manner b1, and the Q time units may be used to determine the second time unit in the manner b1. The second time unit and the uplink resource configuration in the manner b2 may be used to determine a frequency domain position of the first resource, further determining the first resource. For example, the second resource set configured by the uplink resource configuration includes uplink resources in a time unit 1, a time unit 5, a time unit 9, and a time unit 13. If the P time units include the time unit 1 to the time unit 3 in the manner c1, the Q time units may be the time unit 1. Therefore, the second time unit may be the time unit 1. If the frequency domain position of the uplink resource in the time unit 1 is the RE 2, the time domain position and the frequency domain position of the first resource may be respectively the time unit 1 and the RE 2.

In some possible manners, the method shown in FIG. 4 further includes the following step.

S405: The second access network node sends third indication information to the first access network node; and correspondingly, the first access network node receives the third indication information from the second access network node.

In some possible manners, the first access network node and the second access network node may be base stations, and the second access network node may send the third indication information to the first access network node by using an interface between the base stations.

In some other possible manners, the first access network node may implement a communication function with the terminal by using the first node (for example, a DU or an O-DU), and implement a processing function by using the second node (for example, a CU or an O-CU). The second access network node may implement a communication function with the terminal by using the third node (for example, a DU or an O-DU), and implement a processing function by using the fourth node (for example, a CU or an O-CU). For example, the fourth node may send the third indication information to the second node.

The third indication information may include an uplink resource configuration that is in the second access network node and that is used to transmit the information whose destination receiving device is the first access network node. For specific content of the uplink resource configuration, refer to the description of the uplink resource configuration in manner b2. Details are not described herein again. The third indication information may be used to determine the first resource, in other words, the first access network node may determine the first resource based on the third indication information, to send, to the terminal, the first information used to determine the first resource. For example, the first resource set configured by the uplink resource configuration includes uplink resources in a time unit 1, a time unit 5, a time unit 9, and a time unit 13. If the first access network node sends downlink data to the terminal in a time unit overlapping the time unit 2 in the second access network node, the first access network node may determine that the first resource may be a resource in the time unit 5 in the first resource set.

Optionally, a system frame number (system frame number, SFN) and frame time difference (SFN and frame timing difference, SFTD) between the first cell and the second cell and the third indication information may be used to determine the first resource, in other words, the first access network node may determine the first resource based on the SFTD and the third indication information. For specific content of the first cell and the second cell, refer to the descriptions of the first cell and the second cell in the manner c1 respectively. Details are not described herein again.

The following first describes the SFTD. The SFTD may indicate at least one of the following:
1. A difference between system frame numbers of the first cell and the second cell. For example, if a system frame whose frame number is 2 in the first cell and a system frame whose frame number is 1 in the second cell overlap in time domain, the system frame number difference between the first cell and the second cell may be 1.
2. A difference between frame boundaries of the first cell and the second cell. The frame boundary may be a start position of a frame, or may be an end position of a frame. The following uses an example in which the frame boundary is a start position of a frame for description. For example, if a system frame whose frame number is 2 in the first cell and a system frame whose frame number is 1 in the second cell overlap in time domain, and a start position of the system frame whose frame number is 2 in the first cell is one slot earlier than a start position of the system frame whose frame number is 1 in the second cell, a difference between the frame boundaries of the first cell and the second cell may be -1 slot.
3. A difference between slot boundaries of the first cell and the second cell. The slot boundary may be a start position of a slot, or may be an end position of a slot. The following uses an example in which the slot boundary is a start position of a slot for description. For example, if a slot 1 in the first cell and a slot 2 in the second cell overlap in time domain, and a start position of the slot 1 in the first cell is one symbol earlier than a start position of the slot 2 in the second cell, a difference between the slot boundaries of the first cell and the second cell may be -1 symbol.

A manner of obtaining the SFTD is described in the following manner d1. Details are not described herein.

The following uses an example to describe a manner in which the SFTD and the third indication information are used to determine the first resource. For example, the first resource set configured by the uplink resource configuration includes uplink resources in the 1^{st} slot, the 5^{th} slot, the 9^{th} slot, and the 13^{th} slot in the second access network node. The SFTD is -1 slot. The first access network node sends downlink data in the 1^{st} slot in the first access network node. The 1^{st} slot in the first access network node and the 2^{nd} slot in the second access network node overlap in time domain. Therefore, the first access network node may determine that the first resource may be a resource in the 5^{th} slot in the second access network node.

According to the method, both the first access network node and the second access network node can learn of the uplink resource configuration used to transmit the information whose destination receiving device is the first access network node. The first access network node may schedule, for the terminal, a resource configured by the uplink resource configuration; and the second access network node may schedule, for the terminal, a resource other than the resource configured by the uplink resource configuration, so that a scheduling conflict can be avoided, and a success rate of feeding back uplink information by the terminal can be improved.

In some implementations (referred to as an implementation 1 below), the second access network node may actively send the third indication information to the first access network node. For example, the second access network node sends a secondary station addition request to the first access network node; and correspondingly, the first access network node receives the secondary station addition request from the second access network node. The secondary station addition request includes the third indication information.

Optionally, after determining that uplink communication quality between the terminal and the first access network node is less than or equal to a first quality threshold, the second access network node may send the third indication information to the first access network node. The first quality threshold may be preset, for example, specified in a protocol; or may be determined by the second access network node; or may be notified by another node (for example, the first access network node or a core network) to the second access network node.

The following describes how the second access network node determines that the uplink communication quality between the terminal and the first access network node is less than or equal to the first quality threshold. For example, the second access network node may determine, based on a distance between the terminal and the first access network node and a power used by the terminal to communicate with the first access network node, whether the uplink communication quality between the terminal and the first access network node is less than or equal to the first quality threshold. The distance between the terminal and the first access network node may be obtained by the second access network node based on a measurement result of the terminal for the first access network node, and the measurement result may be obtained by the second access network node from the terminal. The power used by the terminal to communicate with the first access network node may be obtained by the second access network node from the terminal.

In some other implementations (referred to as an implementation 2 below), the second access network node may send the third indication information to the first access network node based on a request of the first access network node. That is, the method shown in FIG. 4 further includes the following step.

S406: The first access network node sends a first request to the second access network node; and correspondingly, the second access network node receives the first request from the first access network node. The first request is used to request to obtain the third indication information.

In some possible manners, the first access network node and the second access network node may be base stations, and the first access network node may send the first request to the second access network node by using an interface between the base stations.

In some other possible manners, the first access network node may implement a communication function with the terminal by using the first node (for example, a DU or an O-DU), and implement a processing function by using the second node (for example, a CU or an O-CU). The second access network node may implement a communication function with the terminal by using the third node (for example, a DU or an O-DU), and implement a processing function by using the fourth node (for example, a CU or an O-CU). For example, the second node may send the first request to the fourth node.

In some implementations, after determining that the uplink communication quality between the terminal and the first access network node is less than or equal to the first quality threshold, the first access network node may send the first request to the second access network node. The first quality threshold may be preset, for example, specified in a protocol; or may be determined by the first access network node; or may be notified by another node (for example, the second access network node or a core network) to the first access network node. For a manner in which the first access network node determines that the uplink communication quality between the terminal and the first access network node is less than or equal to the first quality threshold, refer to the description of "the second access network node determines that the uplink communication quality between the terminal and the first access network node is less than or equal to the first quality threshold" in S405. Repeated content is not described again. The measurement result of the terminal for the first access network node and the power used by the terminal to communicate with the first access network node may be obtained by the second access network node from the first access network node.

Optionally, the first request may include information about an uplink resource that the first access network node expects to obtain. In this way, the second access network node may provide, based on the information about the uplink resource that the first access network node expects to obtain, the uplink resource configuration used to transmit the information whose destination receiving device is the first access network node, thereby improving resource utilization and avoiding resource waste. For example, the first request includes at least one of the following 1 to 4:
1. A time domain range of the uplink resource that the first access network node expects to obtain. For example, the time domain range of the uplink resource that the first access network node expects to obtain is a time unit 1 to a time unit 4. The uplink resource configuration included in the third indication information may be used to configure uplink resources in the time unit 1 to the time unit 4.
2. A frequency domain range of the uplink resource that the first access network node expects to obtain. For example, the time domain range of the uplink resource that the first access network node expects to obtain is an RE 1 to an RE 8. The uplink resource configuration included in the third indication information may be used to configure uplink resources in the RE 1 to the RE 8.
3. A size of the uplink resource that the first access network node expects to obtain. For example, the size of the uplink resource that the first access network node expects to obtain includes one time unit. The uplink resource configuration included in the third indication information may be used to configure an uplink resource in one time unit.
4. A carrier spacing of the uplink resource that the first access network node expects to obtain. For example, the carrier spacing of the uplink resource that the first access network node expects to obtain is a carrier spacing 1. The uplink resource configuration included in the third indication information may be used to configure an uplink resource of the carrier spacing 1.

The first request may be a conventional message (for example, a secondary station addition response), or may be a newly added message.

Optionally, the method shown in FIG. 4 further includes the following step.

S407: The second access network node sends fourth indication information to the first access network node; and correspondingly, the first access network node receives the fourth indication information from the second access network node.

In some possible manners, the first access network node and the second access network node may be base stations, and the second access network node may send the fourth indication information to the first access network node by using an interface between the base stations.

In some other possible manners, the first access network node may implement a communication function with the terminal by using the first node (for example, a DU or an O-DU), and implement a processing function by using the second node (for example, a CU or an O-CU). The second access network node may implement a communication function with the terminal by using the third node (for example, a DU or an O-DU), and implement a processing function by using the fourth node (for example, a CU or an O-CU). For example, the fourth node may send the fourth indication information to the second node.

The fourth indication information may indicate that communication between the first access network node and the terminal includes only downlink communication, in other words, the fourth indication information may indicate that the first access network node provides only a downlink SCG for the terminal, and does not need to provide an uplink SCG for the terminal. In this way, after receiving the fourth indication information, the first access network node does not schedule an uplink resource of the first access network node for the terminal, thereby avoiding resource waste. The fourth indication information may explicitly indicate that the communication between the first access network node and the terminal includes only the downlink communication. For example, when a value of the fourth indication information is a value 3 (for example, 0 or 1), the communication between the first access network node and the terminal includes only the downlink communication. Alternatively, the fourth indication information may implicitly indicate that the communication between the first access network node and the terminal includes only the downlink communication. For example, the fourth indication information may be information having a correspondence with the information indicating that the communication between the first access network node and the terminal includes only the downlink communication.

A sequence of performing S405 and S407 is not limited in this application. The third indication information and the fourth indication information may be carried in a same message (for example, the secondary station addition request), or may be carried in different messages. When the third indication information and the fourth indication information are carried in a same message, S405 and S407 may be combined into one step. Optionally, S405 and/or S407 may be performed before S401 and/or S404.

In a conventional communication system, after the terminal sends HARQ feedback information to an access network node, the access network node may determine, based on a resource carrying the HARQ feedback information, downlink data for which the HARQ feedback information is fed back, to determine whether to retransmit the downlink data. According to the method shown in FIG. 4, the terminal sends the second information to the first access network node by using the second access network node. How the first access network node determines downlink data for which the second information is fed back needs to be further discussed.

In some possible manners, the method shown in FIG. 4 further includes the following step.

S408: The second access network node sends time information to the first access network node; and correspondingly, the first access network node receives the time information from the second access network node.

In some possible manners, the first access network node and the second access network node may be base stations, and the second access network node may send the time information to the first access network node by using an interface between the base stations.

In some other possible manners, the first access network node may implement a communication function with the terminal by using the first node (for example, a DU or an O-DU), and implement a processing function by using the second node (for example, a CU or an O-CU). The second access network node may implement a communication function with the terminal by using the third node (for example, a DU or an O-DU), and implement a processing function by using the fourth node (for example, a CU or an O-CU). For example, the fourth node may send the time information to the second node. Optionally, the second node may determine a third time unit based on the time information.

The time information may be used to determine the third time unit. The third time unit may be a time unit in the first access network node, and corresponds to a moment (referred to as a first moment for short below) at which the second access network node receives the second information (or in other words, corresponds to a time unit in which the first resource is located). In some examples, that the third time unit corresponds to a first moment may mean that the third time unit overlaps the first moment in time domain. For example, if the first moment overlaps a time unit 7 in the first access network node in time domain, the third time unit may be the time unit 7 in the first access network node. In some other examples, that the third time unit corresponds to the first moment may mean that the third time unit is a sum of the first moment and a first offset value. The first offset value may be a positive number, 0, or a negative number. The first offset value may be preset, for example, specified in a protocol; or may be determined by the first access network node or the second access network node. By using this method, the first access network node may determine, based on the third time unit, downlink data for which the second information is fed back.

Time information may be used to determine the third time unit in a plurality of manners, for example, a manner d1 and a manner d2.

Manner d1: The time information may indicate a fourth time unit. The fourth time unit may be a time unit in the second access network node, and corresponds to the first moment (or in other words, corresponds to the time unit in which the first resource is located). The fourth time unit may be used to determine the third time unit, in other words, the first access network node may determine the third time unit based on the fourth time unit.

For example, the time information may be first air-interface time information in the second access network node, and the first air-interface time information indicates the fourth time unit. For example, the first air-interface time information may include at least one of the following: a system frame number, a subframe number, a slot number, or a symbol position of the fourth time unit.

There may be a plurality of manners in which the fourth time unit corresponds to the first moment. In some examples, that the fourth time unit corresponds to the first moment may mean that the fourth time unit is a time unit in which the first resource is located. For example, if the time unit in which the first resource is located is a time unit 1 in the second access network node, the fourth time unit may be the time unit 1 in the second access network node. In some other examples, that the fourth time unit corresponds to the first moment may mean that the fourth time unit is a sum of the time unit in which the first resource is located and a second offset value. The second offset value may be a positive number, 0, or a negative number. The second offset value may be preset, for example, specified in a protocol; or may be determined by the first access network node or the second access network node.

The following describes the fourth time unit being used to determine the third time unit.

In some possible manners, the SFTD between the first cell and the second cell and the fourth time unit may be used to determine the third time unit, in other words, the first access network node may determine the third time unit based on the SFTD and the fourth time unit. For specific content of the first cell and the second cell, refer to the descriptions of the first cell and the second cell in the manner c1. For specific content of the SFTD, refer to the description of the SFTD in S405. Details are not described herein again. For example, if the fourth time unit is the 3^{rd} slot in the second access network node, and the SFTD is one slot, the third time unit is the 4^{th} slot in the first access network node.

Optionally, the fourth time unit, the SFTD, and a third offset value are used to determine the third time unit. For example, if the fourth time unit is the 3^{rd} slot in the second access network node, the SFTD is one slot, and the third offset value is one slot, the third time unit is the 5^{th} slot in the first access network node. The third offset value may be a positive number, 0, or a negative number. The third offset value may be preset, for example, specified in a protocol; or may be determined by the first access network node or the second access network node.

In this example, the first access network node can quickly and accurately determine the third time unit based on the SFTD and the fourth time unit.

Optionally, the first access network node may obtain the SFTD. For example, the first access network node may receive fourth information from the terminal or the second access network node, where the fourth information indicates the SFTD. The fourth information may explicitly indicate the SFTD. For example, the fourth information may include the SFTD. Alternatively, the fourth information may implicitly indicate the SFTD. For example, the fourth information may be information having a correspondence with the SFTD. The fourth information may be carried in a conventional message, or may be carried in a new message. According to the method, the first access network node can obtain the SFTD in time.

In addition, when the first access network node receives the fourth information from the second access network node, the fourth information and the second information may be carried in a same message, or may be carried in different messages. A sequence of sending the fourth information and the second information is not limited in this application either.

Optionally, the SFTD may be measured by the terminal. The terminal may measure the SFTD based on an indication of the first access network node or an indication of the second access network node. This is not limited in this application.

In the manner d1, the second access network node may send, to the first access network node, the time information indicating the fourth time unit, and the first access network node may quickly and accurately determine the third time unit based on the fourth time unit.

Manner d2: The time information indicates the third time unit.

For example, the time information may be second air-interface time information in the first access network node, and the second air-interface time information indicates the third time unit. For example, the second air-interface time information may include at least one of the following: a system frame number, a subframe number, a slot number, or a symbol position of the third time unit.

In some implementations, before sending the time information, the second access network node may determine the third time information based on the fourth time information. For example, the second access network node may determine the third time unit based on the SFTD between the first cell and the second cell and the fourth time unit. For specific content, refer to the description of determining, by the first access network node, the third time unit based on the SFTD and the fourth time unit in the manner d1. Details are not described herein again.

Optionally, the second access network node may obtain the SFTD. For example, the second access network node may receive the fourth information from the terminal, where the fourth information indicates the SFTD. For specific content of the fourth information, refer to the description of the fourth information in the manner d1. Details are not described herein again.

In the manner d2, the second access network node may send, to the first access network node, the time information indicating the third time unit. In this way, the first access network node does not need to determine the third time unit through calculation, thereby reducing calculation overheads of the first access network node. In addition, in this manner, the first access network node may not obtain the SFTD, so that overheads required for transmitting the SFTD can be reduced.

In the method shown in FIG. 4, S404 to S408 are optional steps.

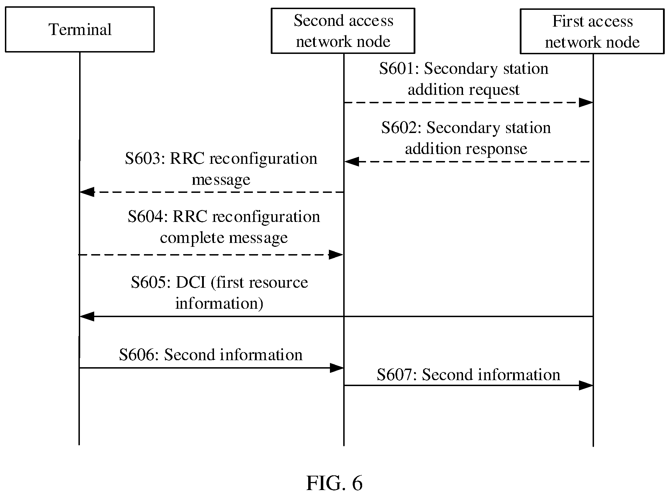

An embodiment of this application provides another communication method. FIG. 6 is a schematic flowchart corresponding to the communication method. The method is a possible example of the method shown in FIG. 4. The method is described by using an example in which a first access network node is a secondary station and a second access network node is a master station. In the method, the second access network node may actively send third indication information to the first access network node, where the third indication information may include an uplink resource configuration that is in the second access network node and that is used to transmit information whose destination receiving device is the first access network node. As shown in FIG. 6, the method includes the following steps.

S601: The second access network node sends a secondary station addition request to the first access network node; and correspondingly, the first access network node receives the secondary station addition request from the second access network node. The secondary station addition request is used to request the first access network node to allocate a resource to a terminal.

The secondary station addition request may include the third indication information. For specific content of the third indication information, refer to the description of the third indication information in S405. For specific content of S601, refer to the implementation 1. Details are not described herein again.

Optionally, the secondary station addition request further includes fourth indication information, and the fourth indication information may indicate that communication between the first access network node and the terminal includes only downlink communication. For specific content of the fourth indication information, refer to the description of the fourth indication information in S407. Details are not described herein again.

S602: The first access network node sends a secondary station addition response to the second access network node; and correspondingly, the second access network node receives the secondary station addition response from the first access network node.

The secondary station addition response may include a resource configuration provided by the first access network node for the terminal, and the resource configuration may include an SCG configuration. In some manners, the SCG configuration includes an uplink resource configuration in the third indication information. In some other manners, the SCG configuration may not include an uplink resource configuration of the first access network node. In still some other manners, the SCG configuration includes the uplink resource configuration in the third indication information, but does not include the uplink resource configuration of the first access network node.

S603: The second access network node sends an RRC reconfiguration message to the terminal; and correspondingly, the terminal receives the RRC reconfiguration message from the second access network node.

Optionally, the RRC reconfiguration message includes resource configuration information, and the resource configuration information may include an uplink resource configuration that is in the second access network node and that is used to transmit the information whose destination receiving device is the first access network node. For specific content of the resource configuration information, refer to the description of the resource configuration information in the manner b2. For specific content of the resource configuration information included in the RRC reconfiguration message, refer to the description of the resource configuration information included in the third information in S404. Details are not described herein again.

S604: The terminal sends an RRC reconfiguration complete message to the second access network node; and correspondingly, the second access network node receives the RRC reconfiguration complete message from the terminal.

S601 to S604 are optional steps.

S605: The first access network node sends DCI to the terminal; and correspondingly, the terminal receives the DCI from the first access network node. The DCI may include first resource information, the first resource information may be used to determine a first resource, and the first resource may be an uplink resource of the second access network node.

For specific content of S605, refer to S401. Repeated content is not described again.

Optionally, the DCI further includes second resource information, the second resource information may indicate a second resource, and the second resource may be a downlink resource between the second access network node and the terminal. For specific content of the second resource information, refer to the description of the second resource information in the manner b1. Details are not described herein again.

S606: The terminal sends second information to the second access network node by using (or using or through or based on) the first resource, or in other words, the terminal sends second information to the second access network node on the first resource; and correspondingly, the second access network node receives the second information from the terminal.

S607: The second access network node sends the second information to the first access network node; and correspondingly, the first access network node receives the second information from the first access network node.

For specific content of S606 to S607, refer to S402 to S403. Details are not described herein again.

Optionally, the second access network node sends time information to the first access network node; and correspondingly, the first access network node receives the time information from the second access network node. For specific content of sending the time information by the second access network node to the first access network node, refer to S408. Details are not described herein again.

According to the method shown in FIG. 6, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience.

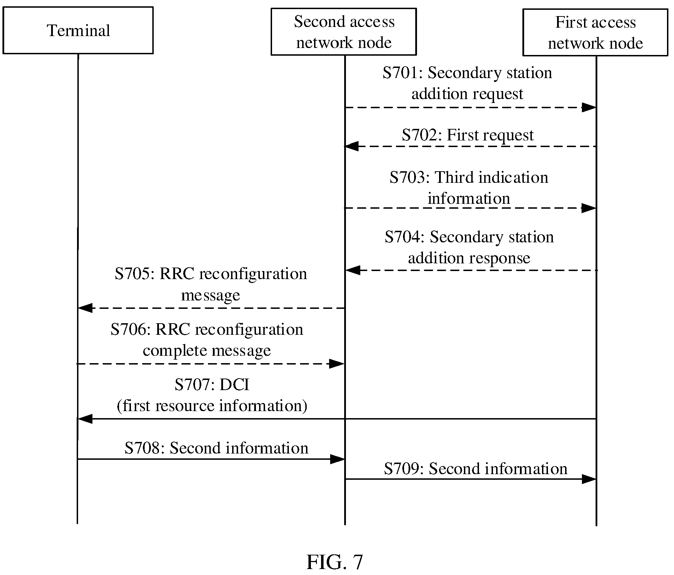

An embodiment of this application provides still another communication method. FIG. 7 is a schematic flowchart corresponding to the communication method. The method is another possible example of the method shown in FIG. 4. The method is described by using an example in which a first access network node is a secondary station and a second access network node is a master station. In the method, after receiving a secondary station addition request, the first access network node may request third indication information from the second access network node, where the third indication information may include an uplink resource configuration that is in the second access network node and that is used to transmit information whose destination receiving device is the first access network node. As shown in FIG. 7, the method includes the following steps.

S701: The second access network node sends a secondary station addition request to the first access network node; and correspondingly, the first access network node receives the secondary station addition request from the second access network node. The secondary station addition request is used to request the first access network node to allocate a resource to a terminal.

In this embodiment, the second access network node does not limit a type of the resource allocated by the first access network node to the terminal, that is, does not limit whether the resource allocated by the first access network node to the terminal is an uplink resource of the first access network node or a downlink resource of the first access network node.

Optionally, the secondary station addition request may include at least one of the following: a measurement result of the terminal for the first access network node or a terminal capability available to the first access network node. The first access network node may determine, based on the measurement result and/or the terminal capability, a cell in the first access network node serving the terminal, and determine whether information from the terminal needs to be received by using an uplink resource of the second access network (that is, determine whether the third indication information needs to be requested). A manner in which the first access network node determines the cell in the first access network node serving the terminal is not limited in this application. When determining that uplink communication quality between the terminal and the first access network node is less than or equal to a first quality threshold, the first access network node may determine that the third indication information needs to be requested. For specific content of determining that the uplink communication quality between the terminal and the first access network node is less than or equal to the first quality threshold, refer to the description of determining that the uplink communication quality between the terminal and the first access network node is less than or equal to the first quality threshold in S406. Details are not described herein again.

S702: The first access network node sends a first request to the second access network node; and correspondingly, the second access network node receives the first request from the first access network node. The first request is used to request to obtain the third indication information. The first request may alternatively have another name, for example, a resource request message.

For specific content of S702, refer to S406. Details are not described herein again.

S703: The second access network node sends the third indication information to the first access network node; and correspondingly, the first access network node receives the third indication information from the second access network node.

For specific content of the third indication information, refer to the description of the third indication information in S405.

S704: The first access network node sends a secondary station addition response to the second access network node; and correspondingly, the second access network node receives the secondary station addition response from the first access network node.

S705: The second access network node sends an RRC reconfiguration message to the terminal; and correspondingly, the terminal receives the RRC reconfiguration message from the second access network node.

S706: The terminal sends an RRC reconfiguration complete message to the second access network node; and correspondingly, the second access network node receives the RRC reconfiguration complete message from the terminal.

S701 to S706 are optional steps.

S707: The first access network node sends DCI to the terminal; and correspondingly, the terminal receives the DCI from the first access network node. The DCI may include first resource information, the first resource information may be used to determine a first resource, and the first resource may be an uplink resource of the second access network node.

S708: The terminal sends second information to the second access network node by using (or using or through or based on) the first resource, or in other words, the terminal sends second information to the second access network node on the first resource; and correspondingly, the second access network node receives the second information from the terminal.

S709: The second access network node sends the second information to the first access network node; and correspondingly, the first access network node receives the second information from the first access network node.

For specific content of S704 to S709, refer to S602 to S607. Details are not described herein again.

According to the method shown in FIG. 7, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience. In addition, in the method, the second access network node initiates, based on the measurement result of the terminal for the first access network node and/or the terminal capability available to the first access network node, a request for obtaining the third indication information, where the third indication information may include the uplink resource configuration that is in the second access network node and that is used to transmit the information whose destination receiving device is the first access network node, so that the uplink communication quality between the terminal and the first access network node can be effectively improved in time by using the second access network node.

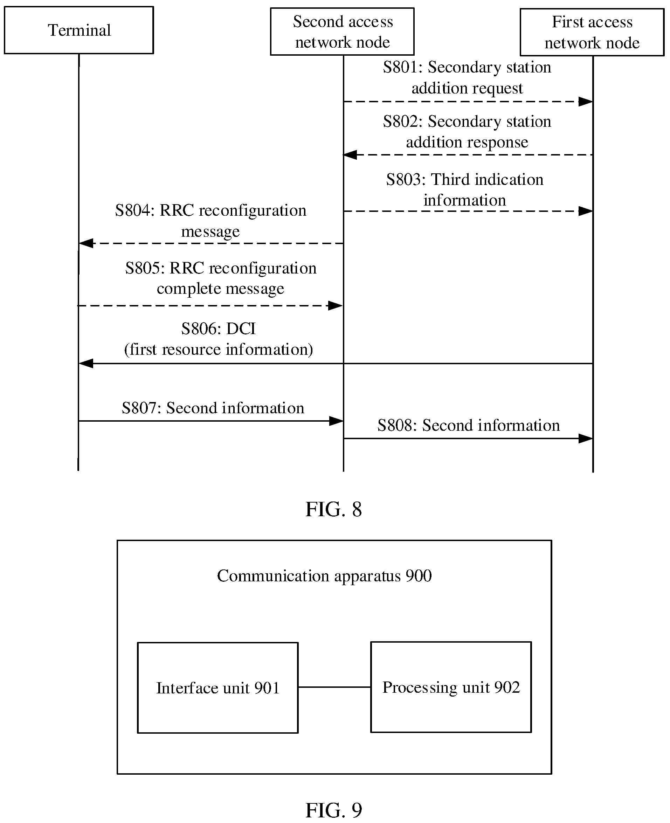

An embodiment of this application provides yet another communication method. FIG. 8 is a schematic flowchart corresponding to the communication method. The method is still another possible example of the method shown in FIG. 4. The method is described by using an example in which a first access network node is a secondary station and a second access network node is a master station. In the method, the first access network node may request the third indication information from the second access network node by using a secondary station addition response, where the third indication information may include an uplink resource configuration that is in the second access network node and that is used to transmit information whose destination receiving device is the first access network node. As shown in FIG. 8, the method includes the following steps.

S801: The second access network node sends a secondary station addition request to the first access network node; and correspondingly, the first access network node receives the secondary station addition request from the second access network node. The secondary station addition request is used to request the first access network node to allocate a resource to a terminal.

For specific content of S801, refer to S701. Details are not described herein again.

S802: The first access network node sends a secondary station addition response to the second access network node; and correspondingly, the second access network node receives the secondary station addition response from the first access network node. The secondary station addition response is used to request to obtain the third indication information.

For specific content of S802, refer to S406, except that the first request is replaced with the secondary station addition response. Details are not described herein again.

S803: The second access network node sends the third indication information to the first access network node; and correspondingly, the first access network node receives the third indication information from the second access network node.

For specific content of the third indication information, refer to the description of the third indication information in S405.

S804: The second access network node sends an RRC reconfiguration message to the terminal; and correspondingly, the terminal receives the RRC reconfiguration message from the second access network node.

S805: The terminal sends an RRC reconfiguration complete message to the second access network node; and correspondingly, the second access network node receives the RRC reconfiguration complete message from the terminal.

S801 to S805 are optional steps.

S806: The first access network node sends DCI to the terminal; and correspondingly, the terminal receives the DCI from the first access network node. The DCI may include first resource information, the first resource information may be used to determine a first resource, and the first resource may be an uplink resource of the second access network node.

S807: The terminal sends second information to the second access network node by using (or using or through or based on) the first resource, or in other words, the terminal sends second information to the second access network node on the first resource; and correspondingly, the second access network node receives the second information from the terminal.

S808: The second access network node sends the second information to the first access network node; and correspondingly, the first access network node receives the second information from the first access network node.

For specific content of S804 to S808, refer to S603 to S607. Repeated content is not described again.

In addition, in S804, an MCG configuration in the RRC reconfiguration message may include resource configuration information.

Optionally, in the method shown in FIG. 8, after S802, the second access network node may refuse to send the third indication information to the first access network node, that is, refuse to send, by using (or using or through or based on) an uplink resource of the second access network node, information whose destination receiving device is the first access network node. In some implementations, the second access network node may send refusal information to the first access network node. The refusal information indicates that the second access network node may refuse to send the third indication information to the first access network node, or the refusal information indicates that the second access network node refuses to send, by using (or using or through or based on) an uplink resource of the second access network node, the information whose destination receiving device is the first access network node. Then, the first access network node and the second access network node may continue to provide a dual connectivity service for the terminal. In some other implementations, the second access network node may initiate a secondary station release procedure to release a connection between the first access network node and the terminal.

According to the method shown in FIG. 8, the terminal may send the second information to the first access network node by using the second access network node. In this way, when uplink communication quality on an air interface between the terminal and the second access network node is relatively good, and uplink communication quality on an air interface between the terminal and the first access network node is relatively poor, the uplink communication quality between the terminal and the first access network node can be improved, so that uplink coverage of the terminal can be improved, thereby improving user experience. In addition, in the method, the second access network node initiates, based on the measurement result of the terminal for the first access network node and/or the terminal capability available to the first access network node, a request for obtaining the third indication information, where the third indication information may include the uplink resource configuration that is in the second access network node and that is used to transmit the information whose destination receiving device is the first access network node, so that the uplink communication quality between the terminal and the first access network node can be effectively improved in time by using the second access network node.

In the method shown in any one of FIG. 4 and FIG. 6 to FIG. 8, all or some steps included in the method may be performed. This is not limited in embodiments of this application.

Based on a same technical concept as the foregoing method embodiments, an embodiment of this application provides a corresponding communication apparatus, which may be configured to perform a function of related steps in the foregoing method embodiments. The function may be implemented by hardware, may be implemented by software, or may be implemented by hardware by executing corresponding software. The hardware or the software includes one or more modules corresponding to the function. The communication apparatus may be a terminal, or may be a module (for example, a circuit or a chip) in a terminal, or may be a logical node, a logical module, or software that can implement all or some functions of a terminal or an access network node. Alternatively, the communication apparatus may be an access network node or a module (for example, a circuit or a chip) in an access network node, or may be a logical node, a logical module, or software that can implement all or some functions of an access network node.

In a possible implementation, a structure of the communication apparatus provided in embodiments of this application is shown in FIG. 9, including a processing unit 902. Optionally, the communication apparatus further includes an interface unit 901. The following describes functions of various units in the communication apparatus 900.

The interface unit 901 is configured to input and/or output information. Inputting information may be replaced with receiving information, and outputting information may be replaced with sending information. When outputting the information, the interface unit 901 may output the information to an apparatus other than the communication apparatus 900, or may output the information to another unit in the communication apparatus 900. In some manners, the interface unit 901 may be implemented by using at least one of a physical interface, a communication module, a communication interface, and an input/output interface. In some other manners, the interface unit 901 may be implemented by using an interface circuit, for example, a mobile communication module. The mobile communication module may include one or more of at least one antenna, at least one filter, a switch, a power amplifier, a low noise amplifier (low noise amplifier, LNA), and the like.

The processing unit 902 may be configured to support the communication apparatus 900 in performing processing actions in the foregoing method embodiments. The processing unit 902 may be implemented by using one or more processors. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an implementation, the communication apparatus 900 is used in the terminal in the embodiment of this application shown in FIG. 4. The following describes a specific function of the processing unit 902 in this implementation.

The processing unit 902 is configured to: receive first information from a first access network node by using the interface unit 901, where the first information includes first resource information, and the first resource information is used to determine a first resource; and send second information to a second access network node by using the interface unit 901 and the first resource, where a destination receiving device of the second information may be the first access network node, a first connection exists between the terminal and the first access network node, and a second connection exists between the terminal and the second access network node.

In some possible manners, the processing unit 902 is further configured to determine the first resource, where the first resource is determined based on the first resource information and resource configuration information, and the resource configuration information includes an uplink resource configuration that is in the second access network node and that is used to transmit information whose destination receiving device is the first access network node.

Optionally, the processing unit 902 is further configured to receive third information from the second access network node by using the interface unit 901, where the third information includes the resource configuration information.

In another implementation, the communication apparatus 900 is used in the first access network node in the embodiment of this application shown in FIG. 4. The following describes a specific function of the processing unit 902 in this implementation.

The processing unit 902 is configured to: send first information to a terminal by using the interface unit 901, where the first information includes first resource information, the first resource information is used to determine a first resource, and the first resource may be an uplink resource of a second access network node; and receive second information from the terminal by using the interface unit 901 and the second access network node.

In some possible manners, the processing unit 902 is further configured to receive third indication information from the second access network node by using the interface unit 901, where the third indication information includes an uplink resource configuration that is in the second access network node and that is used to transmit information whose destination receiving device is the first access network node, and the third indication information is used to determine the first resource.

In some examples, the processing unit 902 is specifically configured to receive a secondary station addition request from the second access network node by using the interface unit 901, where the secondary station addition request includes the third indication information.

In some other examples, the processing unit 902 is further configured to send a first request to the second access network node by using the interface unit 901, where the first request is used to request to obtain the third indication information.

Optionally, the processing unit 902 is further configured to receive fourth indication information from the second access network node by using the interface unit 901, where the fourth indication information indicates that communication between the first access network node and the terminal includes only downlink communication.

In some possible manners, the processing unit 902 is further configured to receive time information from the second access network node by using the interface unit 901, where the time information is used to determine a third time unit, and the third time unit may be a time unit in the first access network node and corresponds to a moment at which the second access network node receives the second information.

Optionally, the processing unit 902 is further configured to obtain a system frame number and frame time difference.

For example, the processing unit 902 is specifically configured to receive fourth information from the terminal or the second access network node by using the interface unit 901, where the fourth information indicates the system frame number and frame time difference.

In still another implementation, the communication apparatus 900 is used in the second access network node in the embodiment of this application shown in FIG. 4. The following describes a specific function of the processing unit 902 in this implementation.

The processing unit 902 is configured to: receive, by using the interface unit 901, second information sent by the terminal by using the first resource, where the first resource may be determined based on the first resource information in the first information from the first access network node; and send the second information to the first access network node by using the interface unit 901. A destination receiving device of the second information may be the first access network node, a first connection exists between the terminal and the first access network node, and a second connection exists between the terminal and the second access network node.

In some possible manners, the processing unit 902 is further configured to send third indication information to the first access network node by using the interface unit 901, where the third indication information includes an uplink resource configuration that is in the second access network node and that is used to transmit the information whose destination receiving device is the first access network node.

In some examples, the processing unit 902 is specifically configured to send a secondary station addition request to the first access network node by using the interface unit 901, where the secondary station addition request includes the third indication information.

In some other examples, the processing unit 902 is further configured to receive a first request from the first access network node by using the interface unit 901, where the first request is used to request to obtain the third indication information.

In some possible manners, the processing unit 902 is further configured to send fourth indication information to the first access network node by using the interface unit 901, where the fourth indication information indicates that communication between the first access network node and the terminal includes only downlink communication.

In some possible manners, the processing unit 902 is further configured to send time information to the first access network node by using the interface unit 901, where the time information is used to determine a third time unit, and the third time unit may be a time unit in the first access network node and corresponds to a moment at which the second access network node receives the second information.

Optionally, the processing unit 902 is further configured to send fourth information to the first access network node by using the interface unit 901, where the fourth information indicates a system frame number and frame time difference.

In some implementations, the processing unit 902 is further configured to send third information to the terminal by using the interface unit 901, where the third information includes resource configuration information, the resource configuration information includes an uplink resource configuration that is in the second access network node and that is used to transmit the information whose destination receiving device is the first access network node, and the resource configuration information is used to determine the first resource.

For more detailed descriptions of the processing unit 902 and the interface unit 901, refer to related descriptions in the method embodiment shown in FIG. 4. Details are not described herein again.

It should be noted that, in the foregoing embodiments of this application, division into modules is an example, is merely logical function division, and may be other division during actual implementation. In addition, functional units in embodiments of this application may be integrated into one processing unit or may exist alone physically, or two or more units may be integrated into one unit. The integrated unit may be implemented in a form of hardware, or may be implemented in a form of a software functional unit.

When implemented in the form of a software functional unit and sold or used as an independent product, the foregoing integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

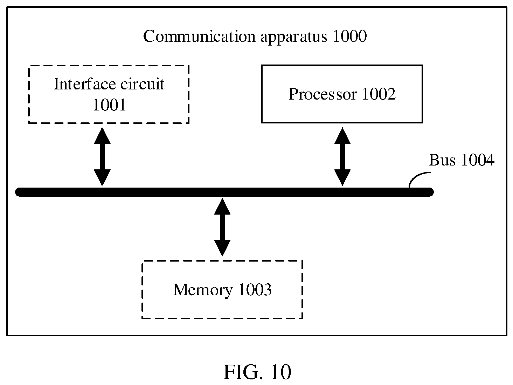

In a possible implementation, for a communication apparatus provided in an embodiment of this application, refer to FIG. 10. The communication apparatus 1000 includes a processor 1002. Optionally, the communication apparatus 1000 further includes an interface circuit 1001 and a memory 1003. The interface circuit 1001, the processor 1002, and the memory 1003 are coupled to each other.

Optionally, the interface circuit 1001, the processor 1002, and the memory 1003 are coupled to each other through a bus 1004. The bus 1004 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one bold line is used for representation in FIG. 10, but this does not mean that there is only one bus or only one type of bus.

The interface circuit 1001 is configured to input and/or output information. Inputting information may be replaced with receiving information, and outputting information may be replaced with sending information. When outputting the information, the interface circuit 1001 may output the information to an apparatus other than the communication apparatus 1000, or may output the information to another unit in the communication apparatus 1000. For example, the interface circuit 1001 may be implemented by using at least one of a physical interface, a communication module, a communication interface, an input/output interface, and a mobile communication module. The mobile communication module may include one or more of at least one antenna, at least one filter, a switch, a power amplifier, an LNA, and the like.

The processor 1002 may be configured to support the communication apparatus 1000 in performing processing actions in the foregoing method embodiments. When the communication apparatus 1000 is configured to implement the foregoing method embodiments, the processor 1002 may be further configured to implement a function of the foregoing processing unit 902. The processor 1002 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor.

In an implementation, the communication apparatus 1000 is used in the terminal in the embodiment of this application shown in FIG. 4. The following describes a specific function of the processor 1002 in this implementation.

The processor 1002 is configured to: receive first information from a first access network node by using the interface circuit 1001, where the first information includes first resource information, and the first resource information is used to determine a first resource; and send second information to a second access network node by using the interface circuit 1001 and the first resource, where a destination receiving device of the second information may be the first access network node, a first connection exists between the terminal and the first access network node, and a second connection exists between the terminal and the second access network node.

In another implementation, the communication apparatus 1000 is used in the first access network node in the embodiment of this application shown in FIG. 4. The following describes a specific function of the processor 1002 in this implementation.

The processor 1002 is configured to: send first information to a terminal by using the interface circuit 1001, where the first information includes first resource information, the first resource information is used to determine a first resource, and the first resource may be an uplink resource of a second access network node; and receive second information from the terminal by using the interface circuit 1001 and the second access network node.

In still another implementation, the communication apparatus 1000 is used in the second access network node in the embodiment of this application shown in FIG. 4. The following describes a specific function of the processor 1002 in this implementation.

The processor 1002 is configured to: receive, by using the interface circuit 1001, second information sent by the terminal by using the first resource, where the first resource may be determined based on the first resource information in the first information from the first access network node; and send the second information to the first access network node by using the interface circuit 1001. A destination receiving device of the second information may be the first access network node, a first connection exists between the terminal and the first access network node, and a second connection exists between the terminal and the second access network node.

For specific functions of the processor 1002, refer to the descriptions of the communication methods provided in the foregoing embodiments and instances of this application and the specific function descriptions of the communication apparatus 900 in the embodiment of this application shown in FIG. 9. Details are not described herein again.

The memory 1003 is configured to store program instructions, data, and/or the like. Specifically, the program instructions may include program code. The program code includes computer operation instructions. The memory 1003 may include a RAM, and may further include a non-volatile memory (non-volatile memory), for example, at least one magnetic disk memory. The processor 1002 executes the program instructions stored in the memory 1003, and implements the foregoing functions by using the data stored in the memory 1003, to implement the communication methods provided in the foregoing embodiments of this application. The memory 1003 may be integrated with the processor 1002, or may be a memory outside the communication apparatus.

It may be understood that the memory 1003 in FIG. 10 in this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is enabled to be performed.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the devices in the foregoing embodiments. In a possible design, the chip system further includes a memory, and the memory is configured to store a program and data that are necessary for the computer apparatus. The chip system may include a chip, or may include a chip and another discrete component.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

This application is described with reference to the flowcharts and/or block diagrams of the method, the device (system), and the computer program product according to this application. It should be understood that each procedure and/or block in the flowcharts and/or the block diagrams and/or a combination of procedures and/or blocks in the flowcharts and/or the block diagrams may be implemented by using computer program instructions. These computer program instructions may be provided to a processor of a general-purpose computer, a special-purpose computer, an embedded processor, or another programmable data processing device to produce a machine, so that the instructions executed by a processor of a computer or another programmable data processing device generates an apparatus for implementing a function specified in one or more procedures in a flowchart and/or in one or more blocks in a block diagram.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

In this application, "at least one" may mean one or more, and "a plurality of" may mean two or more. The term "and/or" describes an association relationship between associated objects and indicates that three relationships may exist. For example, A and/or B may indicate the following cases: Only A exists, both A and B exist, and only B exists. A and B may be singular or plural. In the text descriptions of this application, the character "/" usually indicates an "or" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

It is clear that a person skilled in the art can make various modifications and variations to this application without departing from the scope of this application. In this way, this application is intended to cover these modifications and variations of this application provided that they fall within the scope of the claims and their equivalent technologies.

## Claims

1. A communication method, applied to a terminal or a chip in a terminal, comprising:
receiving first information from a first access network node, wherein the first information comprises first resource information, and the first resource information is used to determine a first resource; and
sending second information to a second access network node by using the first resource, wherein a destination receiving device of the second information is the first access network node, a first connection exists between the terminal and the first access network node, and a second connection exists between the terminal and the second access network node.

2. The method according to claim 1, wherein a format of the first information and/or first indication information in the first information indicates that the first resource is used for communication between the terminal and the second access network node.

3. The method according to claim 1 or 2, wherein that the first resource information is used to determine the first resource comprises:
the first resource information and second resource information are used to determine the first resource, the second resource information indicates a second resource, and the second resource is a downlink resource between the second access network node and the terminal.

4. The method according to claim 3, wherein that the first resource information and the second resource information are used to determine the first resource comprises:
a first value and a first time unit are used to determine the first resource, the first value is indicated by the first resource information, and the first time unit is a time unit in which the second resource is located.

5. The method according to claim 4, wherein that the first value and the first time unit are used to determine the first resource comprises:
the first value and the first time unit are used to determine a second time unit, the second time unit is a time unit in which the first resource is located, and the second time unit is used to determine the first resource.

6. The method according to claim 5, wherein that the first value and the first time unit are used to determine the second time unit comprises:
the first value is k, and k is a positive integer; the first time unit is an n^{th} time unit in the first access network node; and the second time unit is an m^{th} time unit in the second access network node, and m is an integer, wherein
the m^{th} time unit overlaps an (n+k)^{th} time unit in the first access network node in time domain.

7. The method according to claim 6, wherein that the m^{th} time unit overlaps the (n+k)^{th} time unit in the first access network node in time domain comprises:
P time units in the second access network node overlap the (n+k)^{th} time unit in the first access network node in time domain, P is an integer greater than or equal to 2, and the m^{th} time unit belongs to the P time units.

8. The method according to claim 7, wherein that the m^{th} time unit belongs to the P time units comprises:
the m^{th} time unit is one of the following:
an i^{th} time unit in the P time units, wherein i is an integer from 1 to P;
a time unit that is in the P time units and that has a largest overlapping range with the (n+k)^{th} time unit in time domain;
a time unit that is in the P time units and that has a smallest overlapping range with the (n+k)^{th} time unit in time domain;
a j^{th} time unit in Q time units in the P time units, wherein Q is a positive integer, j is an integer from 1 to Q, and an uplink resource used to transmit information whose destination receiving device is the first access network node exists in any one of the Q time units;
a time unit that is in the Q time units and that has a largest overlapping range with the (n+k)^{th} time unit in time domain; or
a time unit that is in the Q time units and that has a smallest overlapping range with the (n+k)^{th} time unit in time domain.

9. The method according to claim 5, wherein that the first value and the first time unit are used to determine the second time unit comprises:
the first value is k, and k is a positive integer; the first time unit is an n^{th} time unit in the first access network node; and the second time unit is an m^{th} time unit in the second access network node, and m is an integer, wherein
an (m-k)^{th} time unit in the second access network node overlaps the n^{th} time unit in time domain.

10. The method according to claim 9, wherein that the (m-k)^{th} time unit in the second access network node overlaps the n^{th} time unit in time domain comprises:
R time units in the second access network node overlap the n^{th} time unit in time domain, R is an integer greater than or equal to 2, and the (m-k)^{th} time unit belongs to the R time units.

11. The method according to claim 10, wherein that the (m-k)^{th} time unit belongs to the R time units comprises:
the (m-k)^{th} time unit is one of the following:
an a^{th} time unit in the R time units, wherein a is an integer from 1 to R;
a time unit that is in the R time units and that has a largest overlapping range with the n^{th} time unit in time domain; or
a time unit that is in the R time units and that has a smallest overlapping range with the n^{th} time unit in time domain.

12. The method according to any one of claims 5 to 11, wherein an uplink resource exists in the second time unit.

13. The method according to claim 12, wherein that the uplink resource exists in the second time unit comprises:
the uplink resource used to transmit the information whose destination receiving device is the first access network node exists in the second time unit.

14. The method according to any one of claims 1 to 13, wherein a format of the second information and/or second indication information in the second information indicates that the destination receiving device of the second information is the first access network node.

15. The method according to any one of claims 1 to 14, further comprising:
determining the first resource, wherein the first resource is determined based on the first resource information and resource configuration information, and the resource configuration information comprises an uplink resource configuration that is in the second access network node and that is used to transmit the information whose destination receiving device is the first access network node.

16. The method according to claim 15, further comprising:
receiving third information from the second access network node, wherein the third information comprises the resource configuration information.

17. A communication method, applied to a first access network node or a chip in a first access network node, comprising:
sending first information to a terminal, wherein the first information comprises first resource information, the first resource information is used to determine a first resource, and the first resource is an uplink resource of a second access network node; and
receiving second information from the terminal by using the second access network node.

18. The method according to claim 17, further comprising:
receiving third indication information from the second access network node, wherein the third indication information comprises an uplink resource configuration that is in the second access network node and that is used to transmit information whose destination receiving device is the first access network node, and the third indication information is used to determine the first resource.

19. The method according to claim 18, wherein receiving the third indication information from the second access network node comprises:
receiving a secondary station addition request from the second access network node, wherein the secondary station addition request comprises the third indication information.

20. The method according to claim 18, further comprising:
sending a first request to the second access network node, wherein the first request is used to request to obtain the third indication information.

21. The method according to claim 20, wherein the first request comprises at least one of the following:
a time domain range of an uplink resource that the first access network node expects to obtain;
a frequency domain range of an uplink resource that the first access network node expects to obtain;
a size of an uplink resource that the first access network node expects to obtain; or
a carrier spacing of an uplink resource that the first access network node expects to obtain.

22. The method according to any one of claims 17 to 21, further comprising:
receiving fourth indication information from the second access network node, wherein the fourth indication information indicates that communication between the first access network node and the terminal comprises only downlink communication.

23. The method according to any one of claims 17 to 22, wherein a format of the first information and/or first indication information in the first information indicates that the first resource is used for communication between the terminal and the second access network node.

24. The method according to any one of claims 17 to 23, wherein that the first resource information is used to determine the first resource comprises:
the first resource information and second resource information are used to determine the first resource, the second resource information indicates a second resource, and the second resource is a downlink resource between the second access network node and the terminal.

25. The method according to any one of claims 17 to 24, further comprising:
receiving time information from the second access network node, wherein the time information is used to determine a third time unit, and the third time unit is a time unit in the first access network node and corresponds to a moment at which the second access network node receives the second information.

26. The method according to claim 25, wherein that the time information is used to determine the third time unit comprises:
the time information indicates a fourth time unit, the fourth time unit is a time unit in the second access network node and corresponds to a moment at which the second access network node receives the second information, and the fourth time unit is used to determine the third time unit; or
the time information indicates the third time unit.

27. The method according to claim 26, wherein that the fourth time unit is used to determine the third time unit further comprises:
a system frame number and frame time difference between a first cell in the first access network node and a second cell in the second access network node and the fourth time unit are used to determine the third time unit.

28. A communication apparatus, comprising a unit configured to perform the method according to any one of claims 1 to 16, or comprising a unit configured to perform the method according to any one of claims 17 to 27.

29. A communication apparatus, comprising a processor, wherein the processor executes instructions to enable the apparatus to perform the method according to any one of claims 1 to 16 or to enable the apparatus to perform the method according to any one of claims 17 to 27.

30. A computer-readable storage medium, wherein the computer-readable storage medium stores a computer program or instructions, and when the computer program or the instructions are executed, the method according to any one of claims 1 to 27 is implemented.

31. A chip, wherein the chip is configured to read a computer program stored in a memory to perform the method according to any one of claims 1 to 27.

32. A communication system, comprising one or more of the following: the communication apparatus according to claim 28 or the communication apparatus according to claim 29.

33. A computer program product, comprising computer program code, wherein when the computer program code is run, the method according to any one of claims 1 to 27 is implemented.
